# EUROPÄISCHE PATENTSCHRIFT

(11) **EP 1 874 843 B1**
(45) Veröffentlichungstag und Bekanntmachung des Hinweises auf die Patenterteilung: **24.08.2011**
(21) Anmeldenummer: 06753416.4
(22) Anmeldetag: 25.04.2006
(51) Int. Cl.: C08G 63/00, C08G 63/668

(54) **WÄSSRIGE ALKYDHARZEMULSION ZUR FIXIERUNG WASSERLÖSLICHER FARBSTOFFE**
AQUEOUS ALKYD RESIN EMULSION FOR FIXING WATER-SOLUBLE DYES
EMULSION AQUEUSE DE RESINE ALKYDE POUR LA FIXATION DE COLORANTS SOLUBLES DANS L'EAU

(30) Priorität: 25.04.2005 DE 102005019087
(43) Veröffentlichungstag der Anmeldung: 09.01.2008
(73) Patentinhaber: Ashland-Südchemie-Kernfest GmbH, 40721 Hilden (DE)
(72) Erfinder: KUHLMANN, Peter, 42489 Wülfrath (DE); WINTER, Reinhard, 42489 Wülfrath (DE); HOLZHÄUSER, Kurt, CH-1024 Ecublens (CH)
(74) Vertreter: Vossius & Partner
(86) Internationale Anmeldenummer: PCT/EP2006/003823
(87) Internationale Veröffentlichungsnummer: WO 2006/114281

(56) Entgegenhaltungen:
- FR-A- 2 552 769
- US-A- 3 442 835
- US-A- 3 639 315
- US-A- 4 555 564
- US-A1- 2004 157 986
- US-B1- 6 787 599
- PATENT ABSTRACTS OF JAPAN Bd. 012, Nr. 387 (C-536), 14. Oktober 1988 (1988-10-14) & JP 63 132975 A (DAINIPPON INK & CHEM INC), 4. Juni 1988 (1988-06-04)
- PATENT ABSTRACTS OF JAPAN Bd. 010, Nr. 214 (C-362), 25. Juli 1986 (1986-07-25) & JP 61 053337 A (HUMAN IND CORP), 17. März 1986 (1986-03-17)

## Beschreibung

Die Erfindung betrifft eine wässrige Alkydharzemulsion, ein Verfahren zur Herstellung eines Alkydharzes, wie es in der Harzemulsion enthalten sein kann, ein Alkydhaze ,wies es mit dem Verfahren erhalten werden kann, sowie einen Lackfilm, der aus der Harzemulsion erhalten werden kann.

Aus ökologischen Gründen versucht man im Bereich der Lacke und Farben Systeme bereit zu stellen, die auf Wasser als Lösungsmittel beruhen. Man vermeidet auf diese Weise beispielsweise Emissionen organischer Lösungsmittel beim Trocknen der Farbe bzw. des Lacks. In vielen Bereichen, z.B. auch im Bereich der Wandfarben und Dekorfarben, ist die Umstellung von Systemen auf der Basis organischer Lösungsmittel auf Systeme auf Wasserbasis bereits nahezu vollständig erfolgt.

JP 62-132975 offenbart eine Beschichtungszusammensetzung, die (A) ein spezielles, in Wasser dispergiertes Polymer, das durch Emulsionspolymerization hergestellt wird, und (B) ein wässriges Urethanharz.

JP 61-053337 beschreibt ein geschäumtes, elastisches Silicon/Urethanmaterial, das aus 100 Gew.-Teile eines speziellen Urethanpräpolyrners und 100 bis 500 Gew.-Teile einer Siliconharzemulsion auf Wasserbasis erhalten wird.

US 4,555,564 betrifft ein Verfahren zur Herstellung von Alkydharzemulsionen, in denen ein Präkondensat zu einem sauren Präkondensat weiterkondensiert wird, welches verestert wird, um ein Harz zu ergeben, das anschließend emulgiert wird.

Spezielle wässrige Emulsionen von oxidativ trocknenden Alkydharzen sind in FR 2 552 769 offenbart.

In der US 1,038,696 wird ein Verfahren zur Herstellung eines wasserlöslichen Alkydharzes beschrieben, wobei in einem ersten Schritt eine Mischung hergestellt wird aus einem Polyethylenglykol oder einem Polypropylenglykol, welche ein Molekülgewicht zwischen 600 und 6.000 aufweisen, und einer nicht oxidierenden einwertigen Fettsäure, die 6 bis 18 Kohlenstoffatome aufweist, oder einer aromatischen oder gesättigten aliphatischen Säure, die 7 bis 14 Kohlenstoffatome enthält und keine Fettsäure ist. Zu dieser Mischung wird ferner eine aromatische oder eine gesättigte aliphatische Dicarbonsäure bzw. das entsprechende Carbonsäureanhydrid gegeben, welche 4 bis 10 Kohlenstoffatome umfasst. Diese Mischung wird bei Temperaturen von 210 bis 290°C (410 bis 550 °F) umgesetzt. Zum dabei erhaltenen Reaktionsprodukt wird ein mehrwertiger Alkohol gegeben, welcher kein Polyethylenglykol und kein Polypropylenglykol ist und der 2 bis 8 Kohlenstoffatome enthält. Das Gemisch wird solange bei 210 bis 290 °C (410 bis 550 °F) zur Reaktion gebracht, bis ein Produkt erhalten wird, das eine Säurezahl von weniger als 10 aufweist. Die noch im Reaktionsprodukt enthaltenen freien Säuregruppen werden mit einer Base neutralisiert, welche bei Temperaturen von weniger als 190 °C (375 °F) flüchtig ist.

In der US 3,442,835 wird ein Verfahren zur Herstellung von Alkydharzen beschrieben, welche mit Polyethylenglykolketten modifiziert sind. Diese Harze sind in Wasser dispergierbar. Sie enthalten als Bestandteile 20 bis 45 % eines trocknenden Öls, 15 bis 40 % eines mehrwertigen Alkohols mit 2 bis 6 Hydroxylgruppen pro Molekül, 5 bis 15 % eines Polyethylenglykols mit einem Molekülgewicht von 600 bis 6.000, 10 bis 25 % einer nicht oxidierenden einbasigen Carbonsäure mit 6 bis 18 Kohlenstoffatomen, sowie 20 bis 35 % einer Dicarbonsäure bzw. deren Anhydrid, welche 4 bis 10 Kohlenstoffatome aufweist. Die Alkydharze werden erhalten, indem das trocknende Ö1, das Polyethylenglykol und ein Drittel des mehrwertigen Alkohols in einem ersten Verfahrensschritt auf 180 - 290 °C (350 bis 550 °F) erhitzt wird, bis eine Mischung mit einer Säurezahl von 0 bis 25 erhalten wird. Die Mischung wird abgekühlt und dann der restliche mehrwertige Alkohol sowie die Dicarbonsäure bzw. ihr Anhydrid zugegeben. In einem zweiten Verfahrensschritt wird die Mischung auf 180 - 290 °C (350 bis 550°F) erhitzt, bis eine Mischung mit einer Säurezahl von 5 bis 25 erhalten wird. Das erhaltene Material wird neutralisiert und dann in einem wässrigen Medium dispergiert.

In der US 3,639,315 wird ein Verfahren beschrieben, mit welchem wässrige Dispersionen von Alkydharzen oder Polyestern, die freie Hydroxylgruppen aufweisen, modifiziert werden können. Dazu werden zur wässrigen Dispersion des Alkydharzes organische Isocyanate gegeben, die aus der Gruppe von Toluoldiisocyanat, Phenylisocyanat und 4,4'-Methylen-bis(cyclohexylisocyanat) ausgewählt sind. Die Umsetzung wird während einer Dauer von 5 bis 180 Minuten bei einer Temperatur zwischen 20 und 95 °C (65 und 200 °F) so lange durchgeführt, bis das organische Isocyanat vollständig abreagiert hat. Die Reaktion wird bei leicht basischen Bedingungen, d.h. bei einem pH-Wert von etwa 7,0 bis 7,5 durchgeführt. Unter diesen Bedingungen erfolgt überraschenderweise keine Zersetzung des Isocyanats durch das Wasser, sondern es tritt eine Reaktion zwischen den freien Hydroxylgruppen des Alkydharzes und den Isocyanatgruppen auf. Bei der Reaktion tritt also eine Vernetzung der Alkydharzpolymere auf, sodass sich das Molekülgewicht des synthetisierten Harzes gegenüber dem Ausgangsprodukt erhöht.

In der DE 198 22 468 A1 werden Zwei-Komponenten-Wasserlacksysteme beschrieben, welche eine Isocyanatkomponente und eine wässrige Emulsion eines hydroxyfunktionellen Alkydharzes umfassen. Das Alkydharz wird aus einer Öl- oder Fettsäurekomponente, einem mehrwertigen Alkohol, einem Polyetherpolyol mit einem Molekülgewicht von 400 bis 8.000, einer einbasigen Carbonsäure sowie einer Dicarbonsäure bzw. deren Anhydrid erhalten. Zur Erhöhung des Ausgangs-Molekülgewichts und zur Verbesserung der physikalischen Trocknung bzw. zur schnelleren Antrocknung kann das Alkydharz mit Isocyanaten vorvernetzt werden. Bei der Modifizierung des hydroxyfunktionellen Alkydharzes mit Isocyanat sollen jedoch nicht mehr als 30 % der verfügbaren Hydroxygruppen umgesetzt werden. Die Umsetzung mit Isocyanat erfolgt üblicherweise im Temperaturbereich von 10 ° bis 70 °C, vorzugsweise 20 ° bis 50 °C. Die Alkydharze sind nach Neutralisation mit Ammoniak oder Aminen ohne Zusatz von Lösungsmitteln in Wasser emulgierbar. Die resultierenden Emulsionen haben üblicherweise einen Feststoffgehalt von 20 bis 70 % und einen pH-Wert von 6 bis 9. Zur Neutralisation werden bevorzugt niedere Alkylamine, wie Ethylamin, Diethylamin oder Triethylamin verwendet, die bei Temperaturen unter 180 °C, vorzugsweise 120 °C flüchtig sind. Zur Herstellung eines Stammlacks wird das Alkydharz mit Wasser bis auf die gewünschte Viskosität verdünnt und ggf. weitere übliche Zuschlagsstoffe zugegeben. Kurz vor der Verarbeitung wird dem Stammlack der Härter, d.h. das Isocyanat, zugefügt. Das Mischungsverhältnis von Stammlack und Isocyanat-Härter richtet sich nach dem Anteil der Hydroxylgruppen in der Polyolkomponente und dem NCO-Gehalt in der Isocyanatkomponente. In Wasserlacken setzt man üblicherweise deutlich höhere Isocyanatmengen ein, da z.B. Isocyanat mit Wasser zu Polyharnstoffen reagiert und dann nicht mehr zur Vernetzung mit der Polyolkomponente zur Verfügung steht. Die Polyol-Komponente dieser Lacke umfasst, keine basischen Gruppen.

In der DE 101 15 933 A1 wird eine Polyesterharzemulsion und ein Zwei-Komponenten Wasserlack beschrieben. Das in der Emulsion enthaltene hydroxyfunktionelle Polyesterharz wird erhalten, indem eine Zusammensetzung umgesetzt wird, die
(i) mindestens einen niedermolekularen mehrwertigen Alkohol mit mindestens zwei Hydroxylgruppen pro Molekül,
(ii) mindestens ein Polyetherpolyol,
(iii) mindestens eine monofunktionelle gesättigte aliphatische, cycloaliphatische oder aromatische Carbonsäure, und
(iv) mindestens eine Polycarbonsäure mit mindestens zwei Carboxylgruppen
enthält, wobei die Zusammensetzung keine ethylenisch ungesättigten Monocarbonsäuren aufweist.

Auf einigen Untergründen, wie Holz, Spanplatten oder Wänden, welche stark mit Tabakrauch kontaminiert sind, werden durch wässrige Lacke jedoch wasserlösliche farbige Substanzen aus dem Untergrund herausgelöst. Dies führt zu einer Verfärbung des Lackfilms. Diese Verfärbungen können in der Praxis auch durch mehrmaliges Überstreichen nicht beseitigt werden. Dieses Phänomen wird oft auch als "Durchbluten" bezeichnet.

Beispiele für Farbstoffe, die bei wässrigen Systemen zu Verfärbungen der Lackschicht führen, sind Holzinhaltsstoffe, wie Tannine, Phenole und Abietinsäure, oder Substanzen, wie sie im Tabakrauch enthalten sind, wie Nikotin oder verschiedene phenolische Verbindungen. Diese Verbindungen enthalten ionische Gruppen, welche die Wasserlöslichkeit dieser Farbstoffe bewirken. Die überwiegende Anzahl der Farbstoffe weist dabei einen anionischen (sauren) Charakter auf. Neben diesen anionischen Farbstoffen gibt es noch eine Reihe kationischer (basischer) Farbstoffe, die Verfärbungen von Lackschichten verursachen. Deren zahlenmäβiger Anteil ist jedoch im Vergleich zu den anionischen Farbstoffen deutlich geringer.

Farbstoffe mit ionischen Gruppen lassen sich mit Lackbindemitteln fixieren, die ebenfalls ionische Gruppen enthalten, wobei diese Gruppen eine entgegengesetzte Ladung zu den geladenen Gruppen des Farbstoffes aufweisen. Es kommt dann zu einer Art ionischer Bindung der Farbstoffe an die ionischen Gruppen des Lackbindemittels. Die Komponenten des Lacks, durch welche ionische Gruppen bereitgestellt werden, müssen allerdings ein ausreichend hohes Molekülgewicht aufweisen, da sonst eine Fixierung der Farbstoffe im Lackfilm nicht möglich ist. So sind die Ammoniumsalze anionischer Farbstoffe im Vergleich zum reinen Farbstoff in der Regel leichter in Wasser löslich. Eine Überführung der störenden Farbstoffe in ihre Ammoniumsalze würde also die Neigung zum Durchbluten noch verstärken.

Die oft als Wandfarbe oder Holzlack verwendeten Acrylatdispersionen enthalten üblicherweise keine ionischen Gruppen. Aus diesem Grund lassen sich störende Farbstoffe mit derartigen Systemen nicht in der Lackschicht fixieren. Acrylatdispersionen enthalten ferner Emulgatoren, welche den Effekt des Durchblutens noch weiter verstärken.

Um eine Sperrwirkung gegenüber anionischen Farben zu erzielen, welche den überwiegenden Anteil der störenden Verfärbungen verursachen, werden in so genannten Isolierfarben derzeit kationische Harzsysteme mit basischen Gruppen eingesetzt. Farben auf der Basis solcher kationischer Harzsysteme zeigen in der Regel eine gute Sperrwirkung gegen das Durchbluten anionischer Farbstoffe. Kationische Farbstoffe, werden durch solche Harzsysteme jedoch nicht fixiert und bluten weiter durch.

Die gängigen kationischen Harzsysteme weisen in der Anwendung jedoch verschiedene Nachteile auf. Um die anionisch geladenen Farbstoffe binden zu können, müssen die kationischen Harze in protonierter Form vorliegen, d.h. die Emulsion des kationischen Harzes weist einen zumindest leicht sauren pH auf. Bei Verwendung von Lacksystemen, welche Polyacrylate oder Alkydharzsysteme enthalten, muss jedoch üblicherweise ein leicht basischer pH-Wert eingestellt werden, um die im Harz enthaltenen Carboxylgruppen zu deprotonieren und so stabile Emulsionen in Wasser zu erhalten. So können Probleme bei der Verträglichkeit der kationischen Harzsysteme mit Komponenten gängiger Lacksysteme auftreten, was zu Einschränkungen in der Stabilität der Lackemulsionen führen kann. Werden kationische Harze zu einer Emulsion eines Alkydharzes oder eines Polyacrylats gegeben, werden die kationischen Gruppen deprotoniert und die Emulsion koaguliert. Außerdem sind die Benetzungseigenschaften derartiger kationischer Harze bzw. Systeme üblicherweise schlechter als bei anionischen oder nicht ionischen Systemen.

Bei Problemfällen werden daher zur Zeit immer noch Systeme auf Basis organischer Lösungsmittel eingesetzt, um das Durchbluten zuverlässig zu verhindern und eine fleckenfreie Oberfläche zu erzielen. Die Verwendung derartiger Systeme wird jedoch in absehbarer Zeit wegen gesetzlicher Vorschriften nicht mehr möglich sein.

Der Erfindung lag daher die Aufgabe zu Grunde, ein wasserbasierendes Harzsystem zur Verfügung zu stellen, aus welchem Schichten hergestellt werden können, die eine Sperrwirkung gegen das Durchbluten störender wasserlöslicher Farbsysteme zeigen.

Diese Aufgabe wird mit einer Harzemulsion mit den Merkmalen des Patentanspruchs 1 gelöst. Vorteilhafte Weiterbildungen der Harzemulsion sind Gegenstand der abhängigen Ansprüche.

Die erfindungsgemäße wässrige Harzemulsion enthält ein Alkydharz, welches erhaltlich ist durch Umsetzung einer Zusammensetzung, die mindestens enthält:
mindestens einen mehrwertigen Alkohol mit mindestens zwei Hydroxylgruppen mit einem Molekülgewicht von zumindest 60g/mol in einem Anteil von 10 bis 35 Gew -%,
- mindestens ein Polyetherpolyol mit einem Molekülgewicht von 400 bis 8.000 g/mol in einem Anteil von 3 bis 15 Gew .-%,
- mindestens eine Carbonsäure in einem Anteil von 10 bis 60 Gew -% und
- mindestens eine mehrbasige Carbonsäure mit mindestens zwei Carbonsäuregruppen bzw. deren Anhydrid in einem Anteil von 10 bis 40 Gew.-%,
wobei die Harzemulsion durch Bereitstellung stickstoffhaltiger basischer Gruppen modifiziert ist, die in einem Molekül enthalten sind, das zumindest zwei stickstoffhaltige basische Gruppen umfasst und das ein Molekülgewicht von zumindest 100 g/mol aufweist ,wobei die stickstoffhaltigen basischen Gruppen entweder über eine kovalente Bindung an das Alkydhar gebunden oder die stickstoffhaltigen basischen Gruppen an einer vom Alkydharz getrennten Verbindung vorgesehen sind.

Das in der erfindungsgemäßen Harzemulsion enthaltene Alkydharz enthält Molekülabschnitte, die sich von Polyetherpolyolen ableiten. Das Harz erhält dadurch eine sehr gute Löslichkeit bzw. Dispergierbarkeit in Wasser. Daneben enthält das Harz noch Carbonsäuregruppen, die über nicht vollständig abreagierte Dicarbonsäuren in das Polymer eingeführt wurden. Diese Carbonsäuregruppen werden normalerweise beispielsweise durch die Zugabe niedermolekularer Amine, wie Triethylamin, neutralisiert. Eine stabile Emulsion eines solchen Harzes weist daher normalerweise einen leicht basischen pH auf, beispielsweise im Bereich von 7,0 bis 7,5, sodass die Carbonsäuregruppen in negativ geladene Carboxylgruppen überführt werden, die beispielsweise als Ammoniumsalze, wie Triethylammoniumsalze, vorliegen.

Überraschenderweise hat sich nun herausgestellt, dass Emulsionen der oben beschriebenen Harze relativ unempfindlich gegenüber pH-änderungen sind und beispielsweise eine derartige Emulsion auch bei sauren pH-Werten, bei denen beispielsweise eine Protonierung von Aminogruppen erfolgen kann, stabil bleibt. Auch bei einem pH-Wert von weniger als 3 wird eine Emulsion erhalten, die über längere Zeit, beispielsweise mehrere Stunden, stabil bleibt. Bei pH-Werten im Bereich von 5,5 bis 6,5 werden Emulsionen erhalten, die über mehrere Wochen hinweg stabil bleiben können. Überraschenderweise ist es daher möglich, stabile Emulsionen herzustellen, die einerseits das oben beschriebene Harz enthalten, welches Carbonsäuregruppen und damit anionische Gruppen umfasst, wobei das System andererseits auch basische, d.h. kationischen, Gruppen umfasst.

An sich sind Bedingungen, die für stabile Emulsionen kationischer Harze eingehalten werden müssen, unvereinbar mit den Bedingungen für stabile Emulsionen anionischer Harze und umgekehrt. Um eine stabile Emulsion zu erhalten, müssen im Polymer geladene ionische Gruppen vorliegen. Unter Bedingungen, bei denen kationische Harze in protonierter Form vorliegen, werden gewöhnlich die negativ geladenen Gruppen anionischer Harze, beispielsweise Carboxylgruppen, ebenfalls protoniert, sodass sie in neutraler Form vorliegen. Wird eine Emulsion eines kationischen Harzes mit einer Emulsion eines anionischen Harzes vereinigt, erhält man daher normalerweise keine stabile Emulsion beider Harze, sondern die Emulsion koaguliert beim Vereinigen.

Die erfindungsgemäße wässrige Harzemulsion stellt sowohl anionische wie auch kationische Gruppen für die Bindung ionischer Farbstoffe bereit. Mit der erfindungsgemäßen wässrigen Harzemulsion lassen sich daher Lackschichten erzeugen, die sowohl kationische als auch anionische Gruppen enthalten. Diese Schichten zeigen eine überraschend hohe Sperrwirkung sowohl gegenüber anionischen Farbstoffen wie auch kationischen Farbstoffen.. Ohne durch diese Theorie gebunden sein zu wollen, nehmen die Erfinder an, dass sowohl die anionischen als auch die kationischen Farbstoffe in einer Art Ionenbindung im Harz bzw. der Lackschicht fixiert werden. Die anionischen Carboxylgruppen sind am Harz kovalent gebunden, sodass eine Wanderung der kationischen Farbstoffe in der Lackschicht weitgehend unterdrückt ist.

Um auch die anionischen Farbstoffe zuverlässig in der Lackschicht fixieren zu können, muss auch der Ionenkomplex aus Farbstoff und kationischer Gruppe eine ausreichend niedrige Wasserlöslichkeit aufweisen, Dies kann erreicht werden, indem das Molekül, das die Stickstoffhaltigen basischen Gruppen in der Emulsion bereitstellt, mehrere stickstoffhaltige basische Gruppen, d.h. mindestes ,zwei, bevorzugt mehr als drei, insbesondere mehr als 4 stickstoffhaltige basische Gruppen bereitstellt und ein ausreichend hohes Molekülgewicht von zumindest 100g/lmol aufweist. Der Wasserlösliche Farbstoff und die basischen Gruppen bilden einen Ionenkomplex aus, der in der Matrix der getrockneten Lackschicht fixiert wird. Dabei ist die Fixierung des Farbstoffs in der Lackschicht umso besser ausgeprägt, je höher das Molekülgewicht der Verbindung ist, durch welche die basischen Gruppen bereitgestellt werden. Bevorzugt werden daher Moleküle zugesetzt, die einen Polymercharakter aufweisen, also eine höhere Anzahl basischer Gruppen sowie ein hohes Molekülgewicht aufweisen. Dies kann erfindungsgemäß beispielsweise dadurch erreicht werden, dass die basischen bzw. kationischen Gruppen vom Alkydharz bereitgestellt werden. Dazu können bei der Herstellung des Alkydharzes Verbindungen zugegeben werden, die basische Gruppen in freier oder geschützter Form umfassen, sodass die basischen Gruppen bereits bei der Synthese des Alkydharzes neben den sauren anionischen Gruppen in das Molekülgerüst eingeführt werden. Nach einer alternativen Ausführungsform kann das Alkydharz auch erst nach seiner Herstellung in der Weise modifiziert werden, dass basische Gruppen in das Polymergerüst eingeführt werden. Dazu kann das Alkydharz nach seiner Synthese mit einer geeigneten Verbindung, die eine reaktive Gruppe für die Reaktion mit dem Alkydharz sowie zumindest eine basische Gruppe, ggf. in geschützter Form, umfasst.

Um einen wasserunlöslichen Komplex mit dem Farbstoff ausbilden zu können, kann als Alternative auch der Weg gewählt werden, einen Komplex aus Farbstoff und dem Molekül, welches die basischen Gruppen bereitstellt, zu erzeugen, dessen Molekülgewicht ausreichend hoch ist und dessen Löslichkeit in Wasser bzw. dessen Beweglichkeit innerhalb des Harzes daher ausreichend herabgesetzt ist. Der Molekülrest, an dem die basischen Gruppen bereitgestellt werden, sollte daher so gewählt werden, dass er ein ausreichend hohes Molekülgewicht bereitstellt. Das Molekülgewicht des Moleküls, durch welche die basischen Gruppen bereitgestellt werden, wird vorzugsweise möglichst hoch gewählt. Das Molekül, durch welches die basische Gruppe bzw. die basischen Gruppen bereitgestellt werden, weist daher ein Molekülgewicht von zumindest 100 g/mol, vorzugsweise zumindest 200 g/mol, besonders bevorzugt mindestens 300 g/mol, insbesondere bevorzugt zumindest 500 g/mol auf. Die obere Grenze für das Molekülgewicht des Moleküls, durch welches die basischen Gruppen bereitgestellt werden, wird dabei durch die Anforderung bestimmt, eine stabile Emulsion bereitzustellen, die sich gut verarbeiten lässt. Die basischen Gruppen können beispielsweise an ein Polymer gebunden sein, das ein ausreichend hohes Molekülgewicht aufweist. Durch das relativ hohe Molekülgewicht des Moleküls, welches die basische Gruppe umfasst, weist der ionische Komplex mit dem zu fixierenden Farbstoff eine vergleichsweise geringe Löslichkeit in Wasser auf, sodass eine zuverlässige Fixierung des Farbstoffes in der Lackschicht erfolgt. Damit lässt sich das Durchbluten von beispielsweise Farbstoffen aus Tabakqualm, welche sowohl anionische als auch kationische Farbstoffe umfassen, zuverlässig unterdrücken.

Die erfindungsgemäße Harzemulsion enthält als Lösungsmittel im Wesentlichen Wasser. Nur in Ausnahmefällen kann die Zugabe geringer Mengen an organischen Lösungsmitteln erforderlich sein, um die Eigenschaften des Lacks, wie beispielsweise den Verlauf, die Benetzung oder die Filmeigenschaften auf einen gewünschten Wert einstellen zu können. Geeignete organische Lösungsmittel sind beispielsweise Alkohole, wie Ethanol oder Propanol, Butylglykol oder Butyldiglykol, Ketone, wie Aceton oder Ethylmethylketon, oder Ether, wie Tetrahydrofuran. Der Anteil des organischen Lösungsmittels an der Emulsion wird vorzugsweise möglichst gering gewählt. Der Anteil beträgt vorzugsweise weniger als 10 Gew.-%, insbesondere bevorzugt weniger als 5 Ges.-%, bezogen auf das Gewicht der Harzemulsion. Bevorzugt ist die Harzemulsion frei von organischen Lösungsmitteln. Beim Aufbringen der Harzemulsion bzw. einer daraus hergestellten Farbe müssen daher keine oder doch zumindest nur sehr geringe Emissionen organischer Lösungsmittel in Kauf genommen werden.

Für die Herstellung des Alkydharzes werden an sich die bei der Herstellung von Polyestern bzw. Alkydharzen üblichen Bestandteile eingesetzt.

Geeignete niedermolekulare mehrwertige Alkohole mit mindestens zwei Hydroxylgruppen sind beispielsweise gesättigte aliphatische Alkohole, die mindestens zwei, bevorzugt mehr als zwei Hydroxylgruppen pro Molekül aufweisen. Es können sowohl monomolekulare Verbindungen der mehrwertigen Alkohole verwendet werden, als auch solche, die einen sehr geringen Oligomerisierungsgrad von vorzugsweise bis zu 6 aufweisen, z. B. di-, tri- oder tetramolekulare Verbindungen. Beispiele für derartige niedermolekulare Oligomere sind Diethylenglykol oder Triethylenglykol. Solche niedermolekulare Verbindungen besitzen üblicherweise ein Molekülgewicht von weniger als 400, bevorzugt von weniger als 200 g/mol. Die niedermolekularen Alkohole weisen ein Molekülgewicht von zumindest 60 g/mol auf.

Besonders bevorzugt werden solche mehrwertigen Alkohole verwendet, die mindestens zwei, insbesondere mehr als zwei, jedoch nicht mehr als sechs Hydroxylgruppen pro Molekül aufweisen. Geeignete niedermolekulare mehrwertige Alkohole weisen bevorzugt 2 bis 20, insbesondere bevorzugt 2 bis 8 Kohlenstoffatome auf.

Beispiele geeigneter mehrwertiger-Alkohole sind:
- zweiwertige Alkohole der allgemeinen Formel

   OH-(R)-OH

   wobei R ein divalenter gesättigter oder ungesättigter aliphatischer oder cycloaliphatischer Kohlehwasserstoffrest ist, der ein oder mehrere (vorzugsweise nicht mehr als 4) nicht-peroxidische Sauerstoffatome enthalten kann und bevorzugt 2 bis 20, besonders bevorzugt 2 bis 8 Kohlenstoffatome aufweist, wie Ethylenglykol, Diethylenglykol, Propylenglykol, Dipropylenglykol, Butylenglykol, Dibutylenglykol oder Neopentylglykol;
- höherwertige Alkohole der allgemeinen Formel 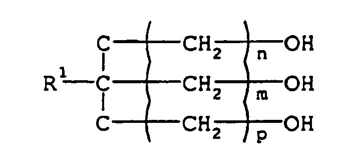 wobei n, m, und p unabhängig 0, 1, 2 oder 3 sind, und R¹ Wasserstoff, ein gesättigter aliphatischer oder cycloaliphatischer C₁-C₆ Kohlenwasserstoffrest oder ein Rest OH- (CH₂) ist, worin q 0, 1, 2 oder 3 bedeutet (mit der Maßgabe, dass q und m nicht gleichzeitig 0 sind), wie Glycerin, Trimethylolethan, Trimethylolpropan oder Pentaerythrit;
- sonstige höherwertige Alkohole, wie Cyclohexandiol, Threit, Erythrit, Arabit, Adonit, Xylit, Dipentaerythrit, Sorbit, Mannit und Dulcit.

Es können selbstverständlich auch Gemische dieser Alkohole eingesetzt werden.

In einer Ausführungsform der vorliegenden Erfindung werden für die Herstellung des Harzes Gemische aus mindestens zwei verschiedenen mehrwertigen Alkoholen eingesetzt. Das Gemisch wird bevorzugt so ausgewählt, dass die durchschnittliche Funktionalität mindestens 2,0, bevorzugt mehr als 2,0, insbesondere 2,1 bis 4,5 ist. Die durchschnittliche Funktionalität bezeichnet die durchschnittliche Anzahl von Hydroxygruppen pro Molekül, gemittelt über alle im Gemisch enthaltenen mehrwertigen Alkohole.

Zur Herstellung des Harzes werden die mehrwertigen Alkohole in einem Anteil von 10 bis 35 Ges.-%, insbesondere 10 bis 30 Gew.-%, bezogen auf das Gewicht des Harzes eingesetzt.

Geeignete Polyetherpolyole sind höhermolekulare Polyetherpolyole, wie Polyethylenglykol, Polypropylenglykol oder Polytetrahydrofuran. Die Polyetherpolyole sind im Gegensatz zu den mehrwertigen Alkoholen polymere Substanzen mit einem Polymerisationsgrad von typischerweise mehr als 8, bevorzugt 50 bis 200. Das Molekülgewicht der verwendeten Polyetherpolyole beträgt 400 bis 8000, insbesondere 1000 bis 6000. Gemische von Polyetherpolyolen sind erfindungsgemäß mit umfasst. Im Gegensatz zu den oben genannten oligomeren mehrwertigen Alkoholen, wie Diethylenglykol oder TriethylenglykoL erfüllen die Polyetherglykole insbesondere die Aufgabe, eine gute Dispergierbarkeit des Harzes in Wasser zu ermöglichten. Die Polyetherketten, insbesondere die Polyethylenglykolketten, erhöhen die Wasserlöslichkeit des Harzes oder anders ausgedrückt, dessen Verträglichkeit mit Wasser. Die Erfinder nehmen an, dass durch den Einbau dieser Polyetherpolyole auch die Toleranz der Emulsion gegenüber pH-Werten im sauren Bereich ermöglicht wird.

Der Anteil der Polyetherpolyole beträgt bezogen auf das Gewicht des Harzes 3 bis 15 Ges.=%, insbesondere 3 bis 8 Gew.-%.

Als Monocarbonsäuren können gesättigte oder ungesättigte aliphatische, cycloaliphatische oder aromatische Verbindungen verwendet werden. Prinzipiell können somit alle für die Herstellung von Alkydharzen üblichen Carbonsäuren für die Herstellung des Harzes verwendet werden. Bevorzugt enthalten die Monocarbonsäuren ethylenisch ungesättigten Einheiten. Die Monocarbonsäuren können einzeln oder als Gemisch verwendet werden.

Geeignete Monocarbonsäuren sind z. B. solche der allgemeinen Formel

R²-COOR'

wobei R² ein gegebenenfalls durch geradkettige oder verzweigte Alkylgruppen mit vorzugsweise 1 bis 4 Kohlenstoffatomen substituierter aromatischer, oder ein geradkettiger oder verzweigter gesättigter oder ungesättigter aliphatischer oder cycloaliphatischer Kohlenwasserstoffrest mit vorzugsweise 6 bis 30 Kohlenstoffatomen, bevorzugt 8 bis 24 Kohlenstoffatomen, insbesondere mit 10 bis 18 Kohlenstoffatomen ist, und R' ein Wasserstoffatom (freie Säure), ein geradkettiger oder verzweigter C₁-C₄ Alkylrest (Ester) oder -(CO)R² (Anhydrid) sein kann.

Bevorzugt werden ungesättigte Monocarbonsäuren in das Harz eingebaut, welche mindestens eine, vorzugsweise mindestens zwei, insbesondere bevorzugt ein bis drei Kohlenstoff-Kohlenstoff-Doppelbindungen aufweisen. Durch die Einführung ungesättigter Fettsäuren ist eine nachträgliche Vernetzung des Harzes durch Reaktion mit Sauerstoff, beispielsweise aus der Luft, möglich. Nach dem Auftrag der Emulsion auf eine Unterlage, beispielsweise als Bestandteil einer Farbe oder in reiner Form als Untergrund, härtet die erzeugte Schicht nach einem anfänglichen raschen Antrocknen im Lauf mehrerer Tage bis Wochen durch eine nachträgliche Vernetzung aus. Dadurch erhöht sich die Härte bzw. die Scheuerfestigkeit des Farbauftrags sowie seine Beständigkeit gegenüber Feuchtigkeit.

Typische Beispiele für geeignete Monocarbonsäuren sind Isodecansäure, Isooctansäure, Cyclohexansäure, Benzoesäure, p-tert.-Butylbenzoesäure und langkettige Carbonsäuren, wie auch natürlich vorkommende gesättigte und ungesättigte Fettsäuren.

Beispiele für natürlich vorkommenden gesättigte Carbon- oder Fettsäuren sind Laurin-, Palmitin- und Stearinsäure. Aber auch technisch vollständig hydrierte Modifikationen natürlicher, ungesättigter Fett- oder Ölsäuren sind gut geeignet.

Beispiele für natürlich vorkommende ungesättigte Carbonsäuren sind Ölsäure, Linolsäure, Linolensäure, Ricinenfettsäure, Ricinolsäure sowie Eläostearinsäure. Es können auch Gemische verschiedener Fettsäuren verwendet werden. Ein Beispiel für ein natürliches Gemisch von Fettsäuren ist Tallölfettsäure, die als Abfallprodukt bei der Papierherstellung anfällt und hauptsächlich aus Ölsäure und Linolsäure besteht.

Es können auch Gemische verschiedener Carbonsäuren verwendet werden, wobei hierbei bevorzugt Gemische aus Fettsäuren und kürzerkettigen bzw. aromatischen Carbonsäuren verwendet werden. Durch die zusätzliche Einführung von Carbonsäuren, die im Vergleich zu Fettsäuren weniger sterisch anspruchsvolle Reste aufweisen, können die Eigenschaften des Harzes, wie dessen Quellbarkeit eingestellt werden und damit die Eigenschaften der Emulsion beeinflusst werden, wie beispielsweise deren Viskosität oder Fließfähigkeit.

Die Menge der Monocarbonsäuren wird im Bereich von 10 bis 60 Gew.-%, insbesondere 15 bis 40 Gew.-%, bezogen auf das Harz, gewählt.

Die Monocarbonsäuren bzw, die mehrwertigen Alkohole können auch über natürliche Öle, bevorzugt trocknende Öle, durch eine Umesterungsreaktion in das Harz eingeführt werden. In der oben gezeigten Formel R²-COOR' bedeutet R' in diesem Fall eine Glyceridrest, also ein. Glycerin, das mit zwei weiteren Fettsäuren verestert ist.

Wie bereits weiter oben in Zusammenhang mit den ungesättigten Fettsäuren erläutert, ermöglicht die Verwendung trocknender Öle eine nachträgliche Aushärtung des Harzes durch eine Quervernetzung durch Sauerstoff. Die Verwendung trocknender Öle ist daher insbesondere bevorzugt, wenn die erfindungsgemäße Harzemulsion zu einer Wandfarbe, insbesondere für Innenräume weiterverarbeitet wird. Unter einem trocknenden Öl wird daher ein Triglycerid von Fettsäuren verstanden, die üblicherweise 10 bis 24 Kohlenstoffatome umfassen, wobei zumindest ein Teil der Fettsäuren mindestens eine, vorzugsweise mindestens zwei, insbesondere bevorzugt eins bis drei Kohlenstoff-Kohlenstoff-Doppelbindungen aufweist. Trocknende Öle weisen üblicherweise eine Jodzahl von >150 auf (ASTM D-1059/85). Beispiele für trocknende Öle sind Leinsamenöl, Holzöl, Ricinenöl und Fischöle. Ferner können auch halbtrocknende Öle verwendet werden, die eine Jodzahl im Bereich von 100 bis 150 aufweisen. Beispiele für halbtrocknende Öle sind Sojaöl, Saffloröl und Sonnenblumenöl.

Nicht-trocknende Öle zeichnen sich durch gute Wetterbeständigkeit und geringe Vergilbungsneigung aus. Die erfindungsgemäß verwendeten nicht-trocknenden Öle umfassen alle natürlich vorkommenden Öle, die üblicherweise bei der Herstellung von Alkydharzen verwendet werden. Der Ausdruck "nicht-trocknendes Öl" bedeutet dabei ein Triglycerid von Fettsäuren, die üblicherweise 10 bis 24 Kohlenstoffatome pro Molekül besitzen und eine Jodzahl von < 110 aufweisen. Gemische sind von der Erfindung mitumfasst.

Geeignete nicht-trocknende Öle schließen pflanzliche Öle, wie Aprikosenkernöl, Erdnussöl, Kapoköl, Kokosöl, Mandelöl, Olivenöl, Palmöl, Rizinusöl ein. Bevorzugt ist Erdnussöl, Kokosöl, Rizinusöl.

Der Ausdruck Öle schließt auch Ester von Fettsäuren mit 10 bis 24 Kohlenstoffatomen mit Triolen, wie Trimethylolethan, Trimethylolpropan ein, wobei das Molverhältnis von Fettsäure zu Triol 3 : 1 beträgt. Gemäß der vorliegenden Erfindung können die Öle als solche oder als esterbildende Vorstufen, beispielsweise als Gemisch von Fettsäuren und Triolen eingesetzt werden, wobei der Ester aus den Vorstufen in situ gebildet wird. Ferner können Gemische verschiedener Öle als Öl- oder Fettsäurekomponente eingesetzt werden.

Bei Verwendung von Ölen wird der Reaktionsmischung bevorzugt zusätzlich ein vorzugsweise polyfunktioneller, kurzkettiger Alkohol zugesetzt, der vorzugsweise ein bis 6 Kohlenstoffatome und 1 bis 5 Hydroxygruppen, insbesondere bevorzugt 2 bis 4 Kohlenstoffatome und 2 bis 4 Hydroxygruppen umfasst, wie Glycerin oder Pentaerythritol, um die Glyceride in einer Umesterungsreaktion mit dem kurzkettigen Alkohol teilweise aufzuspalten, um so die Polymerisation des Harzes zu unterstützen.

Außerdem sind auch Carbonsäuren einsetzbar, die neben der Carboxylgruppe zusätzlich eine Hydroxylgruppe enthalten, wie es z. B. bei der Rizinusölfettsäure, der Dimethylolpropionsäure oder hydrolysierten, expoxidierten Fettsäuren der Fall ist.

Zur Herstellung des Harzes können die Monocarbonsäuren beispielsweise in Form der freien Säure, deren Anhydride oder in Form von Estern einfacher Alkohole (z. B. C₁-C₄ Monoalkohole) eingesetzt werden oder auch, wie oben erläutert, in Form eines Triglycerids.

In der vorliegenden Erfindung werden bevorzugt ungesättigte aliphatische oder cycloaliphatische Monocarbonsäuren verwendet.

In einer Ausführungsform der Erfindung werden Gemische aus mindestens zwei verschiedenen Monocarbonsäuren für die Herstellung des Harzes eingesetzt.

Geeignete mehrbasige Carbonsäuren mit mindestens zwei Carbonsäuregruppen weisen bevorzugt 4 bis 15, insbesondere bevorzugt 4 bis 10 Kohlenstoffatome pro Molekül auf und schließen aliphatische, cycloaliphatische und aromatische Carbonsäuren ein.

Geeignete mehrbasige Carbonsäuren sind beispielsweise Dicarbonsäuren der allgemeinen Formel

HOOC-R³-COOH

wobei R³ ein divalenter Rest, ausgewählt aus einem gesättigten, verzweigten oder unverzweigten, aliphatischen oder cycloaliphatischen Rest mit 2 bis 13 Kohlenstoffatomen, (vorzugsweise mit 2 bis 6 Kohlenstoffatomen), einem, gegebenenfalls durch Alkylgruppen mit vorzugsweise 1 bis 4 Kohlenstoffatomen substituierten, aromatischen Kohlenwasserstoffrest mit insgesamt 6 bis 13 Kohlenstoffatomen (vorzugsweise mit 6 bis 10 Kohlenstoffatomen), oder einem ungesättigten, geradkettigen oder verzweigten, aliphatischen Rest mit 2 bis 13 Kohlenstoffatomen (vorzugsweise mit 2 bis 6 Kohlenstoffatomen) ist.

Beispiele hierfür sind Maleinsäure, Fumarsäure, Bernsteinsäure, Terephthalsäure, Isophthalsäure, Adipinsäure, Glutarsäure, Azelainsäure und o-Phthalsäure.

Aber auch höher funktionelle Carbonsäuren, d. h. Polycarbonsäuren mit mehr als zwei (vorzugsweise jedoch nicht mehr als sechs) Carboxylgruppen pro Molekül können verwendet werden.

Beispiele höherfunktioneller Carbonsäuren sind Tricarbonsäuren, wie Trimellitsäure, Tricarballylsäure, Trimesinsäure oder Hemimellithsäure, Tetracarbonsäuren, wie Pyromellitsäure, oder Polycarbonsäuren mit mehr als drei Carboxylgruppen, wie Mellitsäure.

Als mehrbasige Carbonsäuren können auch Polycarbonsäuren, die mindestens zwei Carboxylgruppen und zusätzlich ein oder mehrere OH-Gruppen aufweisen, verwendet werden, wie Äpfelsäure, Weinsäure, Mesoweinsäure, Traubensäure oder Citronensäure.

Zur Herstellung des Harzes können die mehrwertigen Carbonsäuren entweder in Form der freien Säure oder als Anhydrid oder Ester einfacher C₁-C₉-Alkohole eingesetzt werden.

In einer bevorzugten Ausführungsform werden Gemische aus mindestens zwei verschiedenen mehrbasigen Carbonsäuren (bevorzugt Dicarbonsäuren) verwendet. Die durchschnittliche Funktionalität beträgt dabei bevorzugt mindestens 2,0, besonders bevorzugt 2,0 bis 3,0.

Der Anteil der mehrbasigen Carbonsäuren beträgt bezogen auf das Harz 10 bis 40 Gew.-%, bevorzugt 15 bis 35 Gew.-%.

Die Veresterung der Alkohol- und Säurekomponenten erfolgt in der Regel im Temperaturbereich von 180-260 °C unter Abspaltung von Wasser, das durch Destillation aus dem Reaktionsgemisch entfernt wird. Wie in der Harzchemie üblich, kann dieses Wasser auch durch azeotrope Destillation oder durch Vakuum unterstützt entfernt werden.

Die stöchiometrischen Verhältnisse werden in dem Fachmann bekannter Weise so eingestellt, dass Polyesterharze mit Säurezahlen von 5 - 20 und Hydroxylgehalten von 1 - 8 Gew.-% erhalten werden.

Der Hydroxylgehalt wird wie auf dem Fachgebiet üblich mit Essigsäureanhydrid bestimmt. Die Messung der Säurezahl wird nach DIN 53402 vorgenommen.

Wie in der Alkydharzchemie üblich, kann das Alkydharz nach dem Einstufen- oder Zweistufenverfahren hergestellt werden.

Beim Einstufenverfahren werden Öl- oder Fettsäurekomponente, Monocarbonsäure, mehrwertige Carbonsäure, bzw. das Anhydrid mit den Polyalkoholen und dem Polyetheralkohol bei Temperaturen von 180 bis 260 °C so lange verestert, bis eine Säurezahl von 3 bis 80 mg KOH/g, bevorzugt von 8 bis 20 mg KOH/g, erreicht ist.

Beim Zweistufenverfahren geht man üblicherweise vom natürlich vorkommenden Ö1 aus und setzt dieses bei Temperaturen von 180 bis 260 °C mit mehrwertigen Alkoholen um, bis der gewünschte Umesterungsgrad erreicht ist. In der zweiten Stufe wird unter Wasserabspaltung dieses Reaktionsprodukt mit den Mono- und Polycarbonsäuren sowie dem Polyetheralkohol bei 200 °C bis 260 °C verestert, bis eine Säurezahl von 3 bis 80 mg KOH/g, bevorzugt von 8 bis 20 mg KOH/g, erreicht ist.

Für den Fall, dass die Öl- oder Fettsäurekomponente in situ aus Vorstufen, z. B. aus einem Gemisch von Fettsäure und Triol, gebildet wird, ist ein Einstufenverfahren bevorzugt.

Vorzugsweise liegt der Hydroxylgehalt des in der erfindungsgemäβen Emulsion enthaltenen Alkydharzes bei 1 bis 8 Gew.-% bezogen auf das Alkydharz.

Zur Erhöhung des Molekülgewichts des in der Emulsion enthaltenen Harzes und zur Verbesserung der physikalischen Trocknung bzw. zur schnelleren Austrocknung kann das Harz mit Isocyanaten vorvernetzt werden. Die Umsetzung mit Isocyanat erfolgt üblicherweise im Temperaturbereich von 10 bis 70 °C, vorzugsweise 20 bis 50 °C. Zur Modifizierung können beispielsweise gesättigte aliphatische, cycloaliphatische oder aromatische Polyisocyanate, welche vorzugsweise eine mittlere Funktionalität von mindestens zwei, insbesondere von 2,0 bis 4,5 aufweisen, verwendet werden. Diese Reaktion wird bei neutralem bis schwach basischem pH-Wert, vorzugsweise im Bereich von 7,0 bis 7,5 durchgeführt. Die am Harz noch vorhandenen Hydroxylgruppen können dann mit der Isocyanatgruppe unter Ausbildung eines Urethans reagieren. Die Reaktion mit dem Diisocyanat wird erst durchgeführt, nachdem eine Emulsion des Harzes in Wasser hergestellt worden ist, d.h. nachdem das Harz bereits in Form feiner Tröpfchen verteilt ist. Die Diisocyanate sind in Wasser weitgehend unlöslich und lösen sich bevorzugt in den Harztröpfchen der Emulsion. Die Reaktion des Isocyanats mit dem Harz findet daher innerhalb der feinen Tröpfchen statt, während die als Nebenreaktion auftretende Reaktion des Isocyanats mit. Wasser nahezu vollständig unterdrückt ist. Bei der Vernetzung des Alkydharzes werden keine basischen Gruppen in das Harzpolymer eingeführt, sodass sich eine Isolierwirkung gegenüber anionischen sowie kationischen Farben durch eine Vernetzung des Harzes nicht erreichen lässt. Dies lässt sich beispielsweise durch IR-Spektroskopie nachweisen. Für NH-Gruppen lassen sich im IR-Spektrum Schwingungen bei 3500 - 3100, 1650 - 1510 und 850 - 700 cm⁻¹ nachweisen. Schwingungen in diesen Bereichen, insbesondere bei etwa 1640 cm⁻¹, lassen sich bei einem mit Diisocyanaten vernetzten Alkydharz, in welches keine zusätzlichen basischen Gruppen eingeführt wurden, nicht nachweisen.

Geeignete Isocyanate umfassen die auf dem Fachgebiet üblichen Diisocyanate und/oder höher funktionellen Polyisocyanate. Diese können einzeln oder im Gemisch eingesetzt werden.

Beispiele geeigneter Isocyanate sind:
Toluol-2,4-diisocyanat, Toluol-2,6-diisocyanat, 3-Phenyl-2-ethylendiisocyanat, 1,5-Naphthalindiisocyanat, Cumol-2,4-diisocyanat, 4-Methoxy-1,3-diphenyl-diisocyanat, 9-Chlor-1,3-phenyl-diisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat,2,4'-Diisocyanatodiphenylether, 5,6-Dimethyl-1,3-phenyldiisocyanat, 2,4-Dimethyl-1,3-phenyldiisocyanat, 4,4-Diisocyanatodiphenylether, 4,6-Dimethyl-1,3-phenyldiisocyanat, 9,10-Anthracendiisocyanat, 2,4,6-Toluoltriisocyanat, 2,4,4'-Triisocyanatodiphenylether, 1,4-Tetramethylendiisocyanat, 1,6-Hexamethylendiisocyanat, 1,10-Decamethylendiisocyanat, 1,3-Cyclohexylendiisocyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat), 1,3-Bis(isocyanato-1-methylethyl)-benzol (m-TMXDI), 1,4-Bis(isocyanato-1-methylethyl)benzol (p-TMXDI), oder Trimethylhexamethylen-diisocyanat.

Zur Herstellung der Emulsion kann das Harz ggf. neutralisiert werden. Die Neutralisation kann durch Zugabe einer kleinen Menge eines Neutralisationsmittels erreicht werden, wobei ein Teil der vorhandenen oder alle Säuregruppen im Harz neutralisiert werden. Geeignete Neutralisationsmittel, die erfindungsgemäß verwendet werden können, schließen Ammoniak, Ammoniumhydroxid und primäre, sekundäre und tertiäre Mono- oder Polyamine, einschließlich Hydroxylamine und insbesondere niedere Alkylamine ein, wie Ethylamin, Butylamin, Dimethylamin, Diethylamin, Dimethylethylamin, Dimethylisopropylamin, Diethanolamin, Triethanolamin oder Butanolamin. Amine, die bei Temperaturen unter 180 °C, vorzugsweise unter 120 °C, flüchtig sind, sind bevorzugt. Besonders bevorzugte Amine sind Ammoniak, Triethylamin, Dimethylamin, Dimethylisopropylamin, Dimethylethanolamin, Ethanolamin, Diethanolamin, Triethanolamin, Aminopropanol oder Dimethylaminopropanol. Die Amine können in unverdünnter Form zugegeben werden, wobei im wesentlichen wasserfreie, neutralisierte Harze erhalten werden, die praktisch unbegrenzt in Wasser verdünnt oder dispergiert werden können. Alternativ können die Harze durch Zugabe einer wässrigen Lösung oder Emulsion von Aminen neutralisiert werden. Ebenso können zur Neutralisation anorganische Neutralisationsmittel, wie Kalium- oder Natriumhydroxid oder Carbonate verwendet werden.

Das Harz wird dann auf eine gewünschte Viskosität in Wasser eingestellt, wobei eine wässrige Emulsion mit 5 bis 70 Gew.-%, vorzugsweise 25 bis 55 Gew.-% Harzfeststoff (nicht flüchtig) erhalten wird.

Die erfindungsgemäße Harzemulsion enthält stickstoffhaltige basische Gruppen, mit welchen die Harzemulsion modifiziert ist. Die Modifikation kann dabei in der Weise durchgeführt werden, dass die basischen Gruppen am Harzpolymer gebunden sind oder an einer von diesem getrennten Verbindung vorgesehen sind. Die Verbindung, welche die basischen Gruppen bereitstellt, muss dabei ein Molekülgewicht von mindestens 100g/mol, aufweisen, das ausreichend hoch ist, um nach der Ausbildung eines Komplexes mit einem Farbstoff sicherzustellen, dass der Komplex in der Harz- bzw. Lackschicht nicht diffundiert und damit an die Oberfläche der Lackschicht wandern kann. Gemäß einer ersten Ausführungsform der Erfindung sind daher die basischen bzw. kationischen Gruppen am Harzpolymer vorgesehen. Da das Alkydharz ein hohes Molekülgewicht aufweist, bleiben die in Form eines ionischen Komplexes gebundenen anionischen bzw. kationischen Farbstoffe sicher in der Lackschicht fixiert. In einer zweiten Ausführungsform sind die basischen bzw. kationischen Gruppen in einer Verbindung vorgesehen, die neben dem Alkydharz vorliegt. In diesem Fall betragt das Molekülgewicht dieser basischen Verbihdung mindestens 100g/lmol. Bevorzugt wird eine polymere Verbindung gewählt, um die basischen Verbindungen bereitzustellen.

Um sowohl kationische, wie auch anionische Gruppen für die Bindung von Farbstoffen bereitstellen zu können, wird der pH-Wert der Emulsion bevorzugt in einem Bereich von 5,0 bis 7,0, vorzugsweise 5,5 bis 6,5 eingestellt. Es wird dabei eine stabile Emulsion erhalten.

Wie bereits erläutert, kann die Modifikation des Harzes mit basischen Gruppen bereits dadurch erfolgen, dass eine weitere Verbindung zur Emulsion des Alkydharzes gegeben wird, welche basische Gruppen umfasst. Diese weitere Verbindung soll mit dem kationischen (sauren) Farbstoff einen wasserunlöslichen Komplex ausbilden, der in der Lack- bzw. Farbschicht fixiert werden kann. Dazu können Verbindungen zugegeben werden, die mehrere basische Gruppen im Molekül umfassen. Diese Verbindungen umfassen daher mindestens zwei basische Gruppen, vorzugsweise mindestens drei und insbesondere bevorzugt mindestens vier basische Gruppen. Um die Wasserlöslichkeit des Komplexes aus basischer Verbindung und Farbstoff möglichst gering zu gestalten, wird das Molekülgewicht der basischen Verbindung möglichst hoch gewählt. Das Molekülgewicht der basischen Verbindung beträgt daher mehr als 100 g/mol, bevorzugt mehr als 250 g/mol, insbesondere bevorzugt mehr als 500 g/mol. Vorzugsweise beträgt das Molekülgewicht dieser Verbindungen weniger als 4000 g/mol. Diese obere Grenze für das Molekülgewicht gilt bevorzugt für die Ausführungsform der Erfindung, bei welcher die basischen bzw. kationischen Gruppen nicht im Alkydharz selbst sondern in einer vom Alkydharz getrennten Verbindung vorgesehen sind. Die obere Grenze für das Molekülgewicht des basische Gruppen enthaltenden Polymers wird durch die Bedingung bestimmt, dass das Polymer im Lösungsmittel, im Wesentlichen Wasser, emulgierbar sein muss. Sind die basischen Gruppen im Alkydharz vorgesehen, entspricht das Molekülgewicht der Verbindung, welche die basischen Gruppen bereitstellt, letztlich dem Molekülgewicht des Alkydharzes.

Vorzugsweise werden als basische Gruppen Aminogruppen gewählt, wobei sowohl primäre als auch sekundäre oder tertiäre Aminogruppen gewählt werden können. Primäre und sekundäre Aminogruppen sind bevorzugt. Die basischen Gruppen weisen vorzugsweise eine Basenstärke auf, dass sie bei einem pH-Wert im Bereich von 6,5 bis 5,5 überwiegend in protonierter Form vorliegen. Die Protonierung kann beispielsweise durch NMR-Spektroskopie mittels Austausch durch Deuterium nachgewiesen werden. Die basischen Aminogruppen lassen sich beispielsweise durch IR-Spektroskopie nachweisen. Die basischen Gruppen zeigen im Bereich von etwa 1640 cm⁻¹ eine Absorption im IR-Spektrum.

Geeignete höherfunktionelle basische Verbindungen sind beispielsweise Diamine, wie Ethylendiamin, Hexandiamin, Phenylendiamin, Melamin oder Oligomere bzw. Polymere dieser Verbindungen, wie Diethylentriamin, Triethylentetramin usw. Werden höherfunktionelle Verbindungen mit einem niedrigen Molekülgewicht von weniger als 100 g/mol, vorzugsweise weniger als 400 g/mol verwendet, wie Ethylendiamin, Hexandiamin oder Phenylendiamin, werden diese niedermolekularen Verbindungen am Alkydharz fixiert, um den Komplex aus Farbstoff und basischen Gruppen zuverlässig in der Harzschicht zu fixieren. So ist es erfindungsgemäß nicht ausreichend, zum Alkydharz ein niedermolekulares Amin, wie Ethylendiamin, oder Ammoniak zuzugeben, wie dies beispielsweise erfolgt, um das Alkydharz zu neutralisieren. In diesem Fall bilden die Farbstoffe Ammoniumsalze aus, die gut wasserlöslich sind und daher durch die Lackschicht diffundieren können, um dann eine Verfärbung der Lackschicht zu bewirken.

Als basische Verbindungen, die einen Farbstoff in der Lackschicht zurückhalten können, sind beispielsweise auch höhermolekulare Polyamine geeignet, wie Polyalkylenimine, wie Polyethylenimin oder Polypropylenimin, sowie Polyamidoamine, wie z.B. Kondensationsprodukte aus Fettsäuren und Polyaminen, wobei ein stöchiometrischer Überschuss an Polyamin eingesetzt wird, Addukte von Polyaminen mit niedermolekularen Epoxiden, wie z.B. ein Reaktionsprodukt aus 1 Mol Bisphenol A diglycidylether mit 2 Mol Ethylendiamin. Weitere geeignete höhermolekulare Aminoverbindungen sind beispielsweise die sogenannten Aminoplaste, d.h. Kondensationsprodukte aus höherfunktionellen Aminoverbindungen und Formaldehyd, wie beispielsweise Harnstoff- oder Melaminharze. Diese höhermolekularen Polyamine weisen vorzugsweise ein Molekülgewicht von mehr als 250 g/mol, insbesondere bevorzugt mehr als 500 g/mol auf.

Bevorzugt sind die basischen Gruppen jedoch über eine kovalente Bindung an das Harz gebunden. Bildhaft ausgedrückt können also die bei der oben beschriebenen Ausführungsform erläuterten höherfunktionellen basischen Verbindungen auch direkt in das Harz eingebaut werden. Dazu können bei der Herstellung des Harzes entsprechende Monomere mit umgesetzt werden oder das Harz kann nachträglich in der Weise modifiziert werden, dass basische Gruppen eingeführt werden. Als basische Gruppen werden dabei bevorzugt Aminogruppen in das Harz eingeführt. Die Aminogruppen können sowohl primäre als auch sekundäre oder tertiäre Aminogruppen sein. Primäre und sekundäre Aminogruppen sind dabei bevorzugt.

Zur Einführung basischer Gruppen, insbesondere Aminogruppen, können bei der Herstellung des Harzes geeignete Monomere oder Oligomere eingebaut werden, die beispielsweise eine Aminogruppe oder eine geschützte Aminogruppe umfassen. Eine geschützte Aminogruppe ist dabei eine Aminogruppe, die sich nach dem Einbau des entsprechenden Monomers in das Harzmolekül durch eine selektive Reaktion freisetzen lässt. Ein Beispiel für eine solche geschützte Aminogruppe ist die Isocyanatgruppe, die sich durch Hydrolyse, vorzugsweise bei saurem pH-Wert, unter Abspaltung von Kohlendioxid zur Aminogruppe zersetzen lässt. Weiter können Verbindungen eingesetzt werden, die neben der Aminogruppe bzw. der geschützten Aminogruppe mindestens eine reaktive Gruppe umfassen, die mit einer Gruppe des Harzes, beispielsweise einer Hydroxylgruppe oder einer Carboxylgruppe, reagieren kann. Geeignete Gruppen sind beispielsweise die Isocyanatgruppe, die Thioisocyanatgruppe, die Aminogruppe oder die Hydroxylgruppe. Beispielhafte Verbindungen, die sich durch geeignete Reaktionsführung in das Alkydharz einführen lassen, sind Aminosäuren, wie Alanin, Asparaginsäure, Cystein, Cystin, Glutamin, Glutaminsäure, Glycin, Histidin, Isoleucin, Leucin, Lysin, Prolin, Serin, Tryptophan, Tyrosin und Valin, Diamine, wie Ethylendiamin, Hexandiamin oder Phenylendiamin, Oligomere dieser Diamine mit vorzugsweise 1 bis 5 Wiederholungseinheiten mit der allgemeinen Formel H₂N-(R-NH)ₓ-R-NH₂, wobei R eine Alkylengruppe mit 2 bis 4 Kohlenstoffatomen, insbesondere Ethylen und Isopropylen, und x 1 bis 5 bedeutet, wie Dieethylentriamin, Triethylentetramin und Tetraethylenpentamin, Sulfonamide, Sulfanilamid, höhermolekulare Polyamine, wie Polyamidoamine, wie z.B. Kondensationsprodukte aus Fettsäuren und Polyaminen, mit einem stöchiometrischen Aminüberschuss, Addukte von Polyaminen mit niedermolekularen Epoxiden, wie z.B. ein Reaktionsprodukt aus 1 Mol Bisphenol A Diglycidylether und 2 Mol Ethylendiamin, sowie Polyalkylenimine. Derartige höhermolekulare Polyamine werden üblicherweise als Härter für Epoxidharze eingesetzt. Neben den genannten Aminen können auch andere Aminoverbindungen verwendet werden, wie Harnstoff, Melamin, Carbamidsäureester, Benzoguanamin, Dicyandiamid, Biguanidin, sowie auch die aus diesen Verbindungen hergestellten Kondensationsprodukte mit Formaldehyd, die sogenannten Aminoplaste, wie zum Beispiel Harnstoff- und Melaminharze.

Eine weitere Möglichkeit zur Modifikation der Harzemulsionen mit basischen Gruppen ist die Umsetzung dieser Emulsionen mit reaktiven Verbindungen, die eine basische Gruppe aufweisen bzw. nach der Fixierung der reaktiven Verbindung am Harz so modifiziert werden können, dass sie eine basische Gruppe bereitstellen. Bei dieser Verfahrenvariante wird die basische Gruppe nachträglich in das Harz eingeführt, indem das Harz mit einer geeigneten Verbindung umgesetzt wird, die eine Gruppe aufweist, welche mit einer Gruppe am Harz reagieren kann, sowie einer basischen Gruppe bzw. einer geschützten basischen Gruppe.

Gemäß einer ersten Ausführungsform kann die Einführung von Aminogruppen in das Alkydharz in der Weise erfolgen, dass ein mehrwertiges Amin, das zumindest zwei Aminogruppen umfasst, mit dem Alkydharz umgesetzt wird. Dazu kann das Polyamin, beispielsweise Melamin oder ein Melamin-Formaldehydharz, zum Alkydharz gegeben werden und die Mischung erhitzt werden. Ein Teil der Aminogruppen kann dann unter Abspaltung von Wasser beispielsweise mit im Alkydharz bereitgestellten Carboxylgruppen reagieren, während ein anderer Teil der Aminogruppen frei bleibt und für die Komplexbildung mit Farbstoffen zur Verfügung steht.

Eine nachträgliche Einführung von Aminogruppen ist gemäß einer weiteren Ausführungsform der Erfindung durch die Umsetzung des Harzes mit Isocyanaten, insbesondere Diisocyanaten möglich. Die Aminogruppe wird bei dieser Ausführungsform in geschützter Form als Isocyanatgruppe in das Alkydharz eingeführt und dann durch Hydrolyse freigesetzt. Die Reaktion wird dabei im Gegensatz zu der weiter oben erwähnten Reaktion zur Erhöhung des Molekülgewichts, bei der bei neutralem bis leicht alkalischem pH-Wert Urethane gebildet werden, so geführt, dass die freie Isocyanatgruppe bevorzugt bei einem sauren pH-Wert, vorzugsweise im Bereich von pH 1 bis pH 3, insbesondere bevorzugt pH 1,5 bis pH 2,5 durch Wasser zum Amin hydrolisiert wird. Bei Verwendung von Diisocyanaten kann also eine Isocyanatgruppe mit einer Hydroxylgruppe des Harzes zu einem Urethan reagieren, während die freie Isocyanatgruppe zum Amin hydrolisiert wird. Möglichkeiten hierzu sind beispielsweise die Erhöhung der Menge des eingesetzten Isocyanats bzw. der Wassermenge, die Verschiebung des pH-Wertes bei der Umsetzung des Alkydharzes mit dem Isocyanat sowie der Einsatz geeigneter Katalysatoren. Auch der Zusatz von Aminen, Aminoalkoholen während der Umsetzung des Alkydharzes mit dem Isocyanat erhöht die Ausbeute an Amino- oder Harnstoffgruppen am Harzmolekül.

So kann zur Einführung von Aminogruppen die Emulsion des Harzes mit einer geeigneten Säure, beispielsweise Phosphorsäure, zunächst auf einen stärker saueren pH-Wert, beispielsweise einen pH von weniger als 4,0, insbesondere weniger als 3,0 eingestellt werden. Ggf. kann ein geeigneter Katalysator zugegeben werden, beispielsweise Dibutylzinndilaurat. Es wird dann ein geeignetes Isocyanat zugegeben, beispielsweise ein Diisocyanat. Die Umsetzung wird bei Temperaturen im Bereich von 20 bis 50 °C, bevorzugt bei Raumtemperatur durchgeführt. Wie bereits weiter oben erläutert, mischen sich die Isocyanate nicht oder nur unwesentlich mit Wasser und lösen sich daher bevorzugt in den Harztröpfchen der Emulsion. Eine der Gruppen des Diisocyanats kann dann mit einer Hydroxylgruppen des Harzes reagieren. Durch den relativ sauren pH-Wert der wässrigen Phase der Emulsion kann nun bei zumindest einem Anteil der gebundenen Diisocyanate die andere Isocyanatgruppe zur Aminogruppe hydrolisiert werden. Vermutlich läuft diese Hydrolyse an der Grenzfläche zwischen Harztröpfchen und Wasserphase ab, sodass durch den sauren pH der Wasserphase ein merklicher Anteil an Aminogruppen in das Harz eingeführt werden kann. Nach der Umsetzung wird mit einer geeigneten Base auf einen pH-Wert von etwa 6 neutralisiert, wodurch die erfindungsgemäße Harzemulsion erhalten wird, welche über mehrere Wochen stabil bleibt. Zum Neutralisieren können die bereits weiter oben genannten basischen Verbindungen verwendet werden, beispielsweise Triethylamin.

Allgemein wird vorgesehen, dass die basischen Gruppen, bezogen auf das Harz, in einem Anteil gewählt werden, der einem Stickstoffgehalt von vorzugsweise 0,2 - 15 Gew.-%, bevorzugt 0,5 - 10 Gew.-%, insbesondere bevorzugt 1,0 bis 8,0 bezogen auf den Feststoffgehalt der Emulsion (d.h. bezogen auf das Gewicht des Alkydharzes und des polymeren nichtflüchtigen Amins, wenn Alkydharz und basisches Polymer als getrennte Komponenten vorliegen, bzw. auf das mit basischen Gruppen modifizierte nicht flüchtige Alkydharz, wenn die basischen Gruppen am Alkydharz vorgesehen sind), beträgt. Die Stickstoffbestimmung kann in üblicher Weise vorgenommen werden, beispielsweise durch Stickstoffbestimmung nach Kjeldahl; NMR-Spektroskopie oder vergleichbare Verfahren.

Die Synthese der Alkydharze wird üblicherweise in der Weise durchgeführt, dass das erhaltene Alkydharz eine Säurezahl im Bereich von etwa 8 bis 20 mg KOH/g Harz, vorzugsweise 10 bis 15 mg KOH/g Harz aufweist. Für die nachträgliche Einführung von basischen Aminogruppen kann die Synthese zunächst auch so geführt werden, dass ein Alkydharz mit einer höheren Säurezahl von etwa 20 bis 30 mg KOH/g Harz erhalten wird. Durch die Umsetzung mit der Verbindung, durch welche die basische Aminogruppe eingeführt wird, wird die Säurezahl dann bis in den oben genannten Bereich abgesenkt. Auch bei einer niedrigeren Säurezahl im Bereich von 8 bis 20 mg KOH/g Harz steht jedoch eine ausreichende Menge an freien Hydroxylgruppen zur Verfügung, sodass eine für den Erhalt einer ausreichenden Sperrwirkung der Lackschicht erforderliche Menge an basischen Gruppen in das Harz eingeführt werden kann.

Die modifizierten Harzsysteme können zur Erhöhung des Molekülgewichtes auch bei einem pH von etwa 7,0 bis 7,5 in der weiter oben geschilderten Weise mit Polyisocyanaten vorvernetzt werden. Man geht dabei in der Weise vor, dass zunächst eine Erhöhung des Molekülgewichtes durch eine Vorvernetzung durchgeführt wird und anschließend ggf. basische Gruppen in das Harz eingeführt werden. So kann die Emulsion beispielsweise zunächst auf einen pH von etwa 7,0 bis 7,5 eingestellt werden und durch Zugabe von Diisocyanat eine Vorvernetzung durchgeführt werden. Anschließend wird der pH-Wert durch Zugabe einer geeigneten Säure auf einen Wert von weniger als 4,0, insbesondere weniger als 3,0 abgesenkt und erneut Diisocyanat. zugegeben, um Aminogruppen in das Harz einzuführen. Abschließend wird der pH-Wert auf etwa 5,5 bis 6,5 eingestellt, um eine über mehrere Wochen stabile Emulsion zu erhalten.

Die beschriebenen Harzemulsionen lassen sich anschließend mit den in der Lackindustrie üblichen Zuschlagsstoffen, wie Pigmenten, Füllstoffen und Hilfsstoffen zu pigmentierten oder unpigmentierten Stammlacken formulieren.

Insbesondere eignet sich die erfindungsgemäße wässrige Harzemulsion als Untergrundfarbe zur Isolierung von Farbschichten. In diesem Fall sind der Harzemulsion beispielsweise keine Pigmente zugesetzt. Weiter eignet sich die erfindungsgemäße wässrige Harzemulsion insbesondere als Wandfarbe. Die Wandfarbe weist dabei die übliche Zusammensetzung auf, wobei jedoch das oben beschriebene Harz zugesetzt wird.

Bevorzugt wird zur Aushärtung der Farbe kein Härter zugesetzt. Die Aushärtung der Farbe erfolgt durch Reaktion mit Luftsauerstoff, wenn das Alkydharz trocknende Öle bzw. ungesättigte Fettsäuren enthält. Zur Beschleunigung der Aushärtung kann der Emulsion ein Sikkativ zugesetzt sein, beispielsweise eine Metallion, wie Kobalt. Insbesondere bevorzugt werden Kobaltseifen zugegeben, wie Kobaltnaphtenat oder Kobaltoctoat.

Ein weiterer Gegenstand der Erfindung betrifft ein Verfahren zur Herstellung eines Alkydharzes wie es weiter oben beschrieben wurde, wobei eine Zusammensetzung die mindestens die folgenden Komponenten enthält:
- mindestens einen mehrwertigen Alkohol mit mindestens zwei Hydroxylgruppen mit einem Molekülgewicht von zumindest 60g/mol in einem Anteil von 10 bis 35 Gew -%,
- mindestens ein Polyetherpolyole mit einem Molekülgewicht von 400 bis 8000 g/mol in einem Anteil von 3 bis 15 Gew -%,
- mindestens eine einbasige Carbonsäure in einem Anteil von 10 bis 60 Gew-% und
- mindestens eine mehrbasige Carbonsäure mit mindestens zwei Carbonsäuregruppen bzw. deren Anhydrid in einem Anteil von 10 bis 40 gew. -%,
   zu einem Harz umgesetzt wird , wobei die Anteile auf das Har bezogensind und das Harz durch Einführung stickstoffhaltiger basicscher Gruppen modifiziert wird.

Die Komponenten sowie die Einzelheiten des Verfahrens wurden bereits in Zusammenhang mit der erfindungsgemäßen Harzemulsion erläutert.

Die Modifizierung des Harzes durch Einführung basischer Gruppen kann entweder in der Weise durchgeführt werden, dass ein Monomeres in das Harz einpolymerisiert wird, welches basische Gruppen bereitstellen kann, oder dass das Harz nach der Polymerisation mit einem geeigneten Reagenz umgesetzt wird, mit welchem basische Gruppen in das Harz eingeführt werden. Einzelheiten zu den Verfahrensvarianten sind bereits weiter oben erläutert worden.

Weitere Gegenstände der Erfindung sind ein Harz, das mit dem oben beschriebenen Verfahren erhältlich ist, sowie ein Lackfilm, der aus der oben beschriebenen Harzemulsion durch Verdampfen des wässrigen Lösungsmittels erhalten werden kann. Der Lackfilm weist eine hohe Sperrwirkung gegenüber einem Durchbluten von Farbstoffen auf.

Zur Herstellung des Lackfilms wird die oben beschriebene Harzemulsion auf einen Untergrund, wie eine Wand oder eine Holzoder Gipsplatte aufgetragen. Dazu werden übliche Verfahren verwendet, wie ein Auftrag mittels Pinsel oder Aufsprühen. Die Emulsion kann aber beispielsweise auch in einem Tauchverfahren aufgebracht werden. Es bestehen hier an sich keine Beschränkungen. Anschließend wird das in der Harzemulsion enthaltene Lösungsmittel, vorzugsweise Wasser, verdampft. Das Verdampfen erfolgt üblicherweise bei Raumtemperatur durch Belüften des Lack- bzw. Farbfilms, wie dies beispielsweise bei Wandfarben üblich ist. Zum Verdampfen des Lösungsmittels können jedoch auch höhere Temperaturen angewendet werden, wobei diese jedoch nicht so hoch gewählt werden dürfen, dass eine Reaktion zwischen den basischen Gruppen, insbesondere Aminogruppen, und dem Alkydharz stattfindet. Die Temperatur zum Verdampfen des Lösungsmittels wird vorzugsweise niedriger als 90 °C, bevorzugt niedriger als 60 °C, insbesondere bevorzugt niedriger als 40 °C gewählt. Dies unterscheidet die Verwendung der erfindungsgemäßen Harzemulsion als Farbe von Einbrennlacken, welche zum Vernetzen auf Temperaturen im Bereich von mehr als 120 °C, üblicherweise bei 180 bis 210 °C erhitzt werden, sodass eine chemische Reaktion zwischen Gruppen des Härters, beispielsweise Aminogruppen, und dem Alkydharz unter Vernetzung stattfindet. Der entstandene Lackfilm ist nicht mehr wasserverträglich und meist auch sehr Widerstandsfähig gegen organische Lösungsmittel.

Die erfindungsgemäße Harzemulsion wird als Ein-Komponenten System verwendet, d.h. sie umfasst keinen Härter. Eine Aushärtung der Lack- bzw. Farbschicht kann durch Reaktion mit Luftsauerstoff erfolgen, wenn das Alkydharz ungesättigte Fettsäuren umfasst. Diese Aushärtung der Lack- bzw. Farbschicht erfolgt sehr langsam, üblicherweise während mehrerer Wochen. Auf diese Weise erhält die Farb- bzw. Lackschicht eine wenn auch geringe jedoch ausreichende Wasser- und Scheuerfestigkeit.

Die Erfindung wird im Weiteren anhand von Beispielen näher erläutert.

### Beispiel 1: Herstellung einer Alkydharzemulsion

Die Herstellung der Alkydharzemulsion erfolgte analog Beispiel 1 der US 3639315. 261,1 g Safloröl, 154,0 g Pentaerythritol, 186,1 g p-tert.Butylbenzoesäure, 88,8 g Polyethylenoxidglykol und 0,07 g Lithiumhydroxid wurden unter Rückfluss erhitzt und das entstehende Wasser über einen Wasserabscheider abgetrennt. Die Temperatur wurde auf 240°C erhöht und die Mischung solange erhitzt, bis das Harz einen Säurewert von weniger als 5 mg KOH/g Harz aufwies. Die Mischung wurde dann abgekühlt und 205,5 g Phthalsäureanhydrid, 73,6 g Isophthalsäureanhydrid und weitere 90,4 g Pentaerythritol zugegeben. Die Mischung wurde dann auf 220 °C erwärmt bis eine Säurezahl von 14,4 mg KOH/g Harz erreicht war. Das Harz wurde durch Zugabe von 2,2 g Triethylamin neutralisiert und in Wasser dispergiert. Es wurde eine weiße Emulsion mit einem Feststoffgehalt von 42,5 Gew.-% erhalten, die einen pH von 7,1 aufwies.

### Beispiel 2: Einführung von basischen Gruppen in das Alkydharz

Bei diesem Beispiel erfolgt die Einführung von Aminogruppen in das Alkydharz durch Umsetzung des Alkydharzes mit höherwertigen Isocyanaten und anschließender Hydrolyse der freien Isocyanatgruppen.

288 g der in Beispiel 1 erhaltenen Alkydharzemulsion wurden in einem 1-1 Glaskolben gegeben und mit Phosphorsäure auf einen pH-Wert von 2,5 eingestellt. Diese Emulsion wurde auf 30°C temperiert und dann unter Rühren innerhalb von 5 Minuten 12 g eines technischen Gemisches von 2,4-Toluoldiisocyanat und 2,6-Toluoldiisocyanat (TDI) zugegeben. Die Mischung wurde für 10 Minuten intensiv gerührt und dann 1,5 g einer Mischung aus 10 Gew.-% Dibutylzinnlaurat (DBTL) in Butylacetat hinzugefügt. Die Mischung wurde noch weitere 2 Stunden gerührt und dann 22 Stunden bei Raumtemperatur (23 °C) stehen gelassen, wobei sich eine leicht braun gefärbte Emulsion bildete. Die Braunfärbung zeigt, dass sich aromatische Aminogruppen gebildet haben. Diese Emulsion wird mit Ammoniumhydratlösung auf pH 6,0 eingestellt.

### Beispiel 3: Einführung von basischen Gruppen in das Alkydharz

Bei diesem Beispiel erfolgt die Einführung von Aminogruppen in das Alkydharz wie in Beispiel 2 durch Umsetzung des Alkydharzes mit höherwertigen Isocyanaten und anschließender Hydrolyse der freien Isocyanatgruppen.

Beispiel 2 wurde wiederholt, wobei jedoch an Stelle von TDI 1-Isocyanato-3-methylisocyanato-3,5,5-trimethylcyclohexan (Isophorondiisocyanat/IPDI) verwendet wurde. Die Emulsion blieb weiß, da sich ein aliphatisches Amin bildete.

### Vergleichsbeispiel 1: Erhöhung des Molekülgewichts durch Vorvernetzung

Bei diesem Vergleichsbeispiel erfolgt durch das mehrwertige Isocyanat lediglich eine Vernetzung des Alkydharzes, wobei keine Aminogruppen durch Hydrolyse von Isocyanatgruppen erzeugt werden.

288 g der in Beispiel 1 erhaltenen Alkydharzemulsion, die einen pH von 7,2 aufwies, wurden in einen 1-1 Glaskolben gegeben und auf 30 °C temperiert. Unter Rühren wurde innerhalb von 5 Minuten 12 g eines technischen Gemisches von 2,4-Toluoldiisocyanat und 2,6-Toluoldiisocyanat (TDI) zugegeben. Die Mischung wurde noch weitere 2 Stunden gerührt und dann 22 Stunden bei Raumtemperatur (23 °C) stehen gelassen. Die Emulsion behielt ihre weiße Farbe, da sich kein aromatisches Amin bildet sondern ein Urethan, welches einzelne Harzpolymere zu einem größeren Polymer verknüpft.

### Vergleichsbeispiel 2:

Bei diesem Vergleichsbeispiel erfolgt wie bei Vergleichsbeispiel 1 lediglich eine Vernetzung des Alkydharzes, wobei jedoch keine Aminogruppen in das Harz eingeführt werden.

Vergleichsbeispiel 1 wurde wiederholt, wobei jedoch an Stelle von TDI 1-Isocyanato-3-methylisocyanato-3,5,5-trimethylcyclohexan (Isophorondiisocyanat/IPDI) verwendet wurde. Es wurde eine weiße Emulsion erhalten.

### Beispiel 4:

Bei diesem Beispiel werden analog zu den Beispielen 2 und 3 nachträglich Aminogruppen in das vorvernetzte Alkydharz eingeführt, indem das in Vergleichsbeispiel 1 erhaltene vorvernetzte Alkydharz bei einem sauren pH-Wert mit Diisocyanaten umgesetzt werden, sodass durch Hydrolyse von Isocyanatgruppen freie Aminogruppen in das Harz eingeführt werden.

Die in Vergleichsbeispiel 1 erhaltene Emulsion wurde mit Phosphorsäure auf einen pH von 2,5 eingestellt und anschließend auf 30°C temperiert. Dann wurden unter Rühren innerhalb von 5 Minuten 6 g eines technischen Gemisches von 2,4-Toluoldiisocyanat und 2,6-Toluoldiisocyanat (TDI) zugegeben. Die Mischung wurde für 10 Minuten intensiv gerührt und dann 1,5 g einer Mischung aus 10 Gew.-% Dibutylzinnlaurat (DBTL) in Butylacetat hinzugefügt. Die Mischung wurde noch weitere 2 Stunden gerührt und dann 22 Stunden bei Raumtemperatur (23 °C) stehen gelassen, wobei sich eine leicht braun gefärbte Emulsion bildete. Die Braunfärbung zeigt, dass sich aromatische Aminogruppen gebildet haben. Diese Emulsion wird mit Ammoniumhydratlösung auf pH 6,0 eingestellt.

### Beispiel 5:

Bei diesem Beispiel erfolgt die Einführung von Aminogruppen indem ein Alkydharz mit einem polymeren Melaminharz umgesetzt wird. Das Melaminharz umfasst Aminogruppen, die anteilig mit dem Alkydharz reagieren können, sodass Melaminharz und Alkydharz kovalent aneinander gebunden werden.

564 g Distelöl, 166 g Pentaerythritol, 402 g p-tert.-Butylbenzoesäure und 192 g Polyethylenglykol (Molekülgewicht: 3.000 bis 3.700) wurden in einem Kolben, der mit einem Thermometer, einem Rührer sowie einem Wasserabscheider versehen war, auf 230 °C erhitzt. Die Temperatur wurde solange gehalten, bis das entstandene Harz einen Säurewert von 30 mg KOH/g Harz aufwies. Die Mischung wurde auf Raumtemperatur abgekühlt und dann 585 g Phthalsäureanhydrid sowie weitere 332 g Pentaerythritol zugegeben. Die Mischung wurde dann auf 220 °C erwärmt, bis das Harz einen Säurewert von 15 mg KOH/g Harz aufwies. Zu 270 g dieses Harzes wurden bei 180 °C innerhalb von 5 Minuten 30 g eines kommerziell erhältlichen Melaminformaldehydharzes (Luwipal^{®} 066, BASF AG, Ludwigshafen, DE) zugegeben und die Mischung noch weitere 15 Minuten bei 180 °C gerührt. Das Harz wurde bei einem pH-Wert von 7,5 in Wasser emulgiert und diese Emulsion dann mit Phosphorsäure auf einen pH von 5,8 eingestellt.

### Beispiel 6:

Bei diesem Beispiel liegen Alkydharz und Melaminharz nebeneinander vor und sind nicht durch eine kovalente Bindung miteinander verbunden.

Zu 270 g einer in Beispiel 1 erhaltenen Alkydharzemulsion wurden bei 25 °C 30 g eines Melaminformaldehydharzes (Luwipal^{®} 066, BASF AG, Ludwigshafen, DE) eingerührt und diese Emulsion dann mit Phosphorsäure auf einen pH von 6,0 eingestellt.

### Beispiel 7:

Bei diesem Beispiel werden die Aminogruppen in das Alkydharz eingeführt, indem das Alkydharz nachträglich mit einem niedermolekularen Amin, hier Melamin, umgesetzt wird. Das Melamin wird kovalent an das Alkydharz gebunden.

Beispiel 5 wurde wiederholt, wobei jedoch an Stelle eines Melaminformaldehydharzes 30 g Melamin verwendet wurde.

### Beispiel 8:

Bei diesem Beispiel werden die Aminogruppen nachträglich in das Alkydharz eingeführt, indem ein niedermolekulares mehrwertiges Amin, hier Triethylentetramin, kovalent an das Alkydharz gebunden wird.

Beispiel 1 wurde wiederholt, wobei die Mischung jedoch nur solange erhitzt wurde, bis eine Säurezahl von 30 mg KOH/g Harz erreicht worden war. Die Mischung wurde auf 160°C abgekühlt und dann zu 270 g dieses Harzes 30 g Triethylentetramin zugegeben. Die Mischung wurde dann wieder auf 200°C erwärmt und für weitere 30 Minuten bei dieser Temperatur gehalten. Dabei färbte sich das Harz dunkelbraun.

Dieses Harz wurde bei einem pH von 7,3 in Wasser emulgiert und die Emulsion anschließend mit Phosphorsäure auf einen pH von 6,1 eingestellt.

### Beispiel 9:

50 g Zigarettentabak wurden in ein Glasgefäß gegeben und mit 100 ml Wasser übergossen. Diese Mischung wurde in einem Autoklaven 30 Minuten auf 120°C erwärmt und dann stehen gelassen bis sich die Mischung auf Umgebungstemperatur abgekühlt hatte. Die abgekühlte Mischung wurde durch ein Filter gegossen und das braune Filtrat als Testlösung verwendet.

### Beispiel 10:

Aus den in den Beispielen 2, 3 und Vergleichsbeispielen 1 und 2 erhaltenen Emulsionen wurde jeweils folgende Farbe hergestellt:
Unter einem Dissolver wurden 635 g Wasser, 12,5 g eines Entschäumers (Foamex^{®} 805,Tego Chemieservice GmbH, Essen, DE) und 10 g eines Netzmittels (Disperbyk^{®} 191; Byk-Chemie GmbH, Wesel, DE) sowie 5 g eines organischen Verdickers (Optigel^{®} EXM 629, Süd-Chemie AG, München, DE) homogen vermischt. Dann wurden nacheinander unter starkem Rühren 550 g Titandioxid, 355 g Kaolin und 142 g Kieselgur zugegeben und die gesamte Mischung 10 Minuten lang dispergiert. Abschließend wurden 707 g der jeweiligen Alkydharzemulsion sowie 93 g eines Assoziativverdickers (Optiflo^{®} H 370, Süd-Chemie AG, München, DE) zugegeben.

### Vergleichsbeispiel 3:

Beispiel 10 wurde wiederholt, wobei jedoch an Stelle der Alkydharzemulsion eine Styrol-Acrylat-Dispersion als Bindemittel verwendet wurde.

### Beispiel 11:

Eine weiße Gipskartonplatte wurde jeweils mit einem 10 cm breiten Streifen des in Beispiel 9 hergestellten Tabaksuds sowie dem Farbstoff Eosin Scharlach bestrichen. Die Platte wurde zum Trocknen 2 Tage an der Luft gelagert und dann in einem Winkel von 90° zu den Farbstreifen mit Streifen der in Beispiel 10 sowie Vergleichsbeispiel 3 erhaltenen Farbe bestrichen, wobei jeweils ein Streifen mit einer, zwei und drei Schichten überstrichen wurde. Zur Auswertung wurde beurteilt, ob der Farbstoff nach dem Trocknen noch sichtbar war. Hierzu wurde eine Bewertungsskala von 1 bis 5 verwendet, wobei 1 keine Wirkung und 5 eine vollständige Abdeckung bedeutet. Die Ergebnisse sind in Tabelle 1 zusammengefasst.

**Tabelle 1: Abdeckwirkung der Farben**

| Schichten | Beisp. 2 | Beisp. 3 | Vglbsp. 1 | Vglbsp. 2 | Vglbsp. 3 |
|---|---|---|---|---|---|
| 1 | 4 | 4 | 2 | 2 | 1 |
| 2 | 5 | 5 | 3-4 | 3-4 | 2 |
| 3 | 5 | 5 | 5 | 5 | 3 |

Bei den in Beispiel 2 und 3 erhaltenen Farben, welche jeweils ein Alkydharz umfassen, das kovalent an das Harz gebundene Aminogruppen aufweist, wird bereits mit einem einfachen Anstrich eine hohe Isolierwirkung erzielt. Wird der Anstrich mehrmals wiederholt, wird eine zuverlässige Isolierwirkung erzielt, bei welcher keine Farben aus dem Tabaksud mehr an die Oberfläche der Farbschicht wandern können.

Bei den Vergleichsbeispielen 1 und 2, in welchen Farben verwendet wurden, die in Alkydharz enthalten, das lediglich (nicht basische) Urethangruppen aufweist, die bei der Vorvernetzung durch ein Diisocyanat in das Alkydharz eingeführt wurden, wird bei einem einmaligen Anstrich keine zufriedenstellende Isolierwirkung erzielt. Die Isolierwirkung lässt sich steigern, indem der Farbauftrag mehrfach wiederholt wird. Es ist jedoch notwendig, den Farbauftrag zumindest dreimal zu wiederholen, um eine zufriedenstellende Isolierwirkung zu erreichen.

Bei Vergleichsbeispiel 3, in welchem eine Farbe verwendet wurde, die eine Styrol-Acrylat-Dispersion als Bindemittel enthält, wurde auch bei mehrmaligem Farbauftrag keine zufriedenstellende Isolierwirkung erreicht.

### Beispiel 12:

Wie in Beispiel 11 beschrieben, wurde eine weiße Gipskartonplatte mit Streifen von Tabaksud und Eosin Scharlach bestrichen. Die in den Beispielen 2 bis 8 sowie den Vergleichsbeispielen 1 bis 3 erhaltenen Emulsionen mit Wasser auf einen Harzgehalt von 25 ± 1 Ges.-$ verdünnt und der Karton jeweils mit einem Streifen im Winkel von 90° zu den Farbstoffstreifen überstrichen. Nach dem Trocknen (24 Stunden bei Raumtemperatur) wurden diese Streifen dann mit der Styrol-Acrylat Dispersionsfarbe aus Vergleichsbeispiel 3 überstrichen. Die Isolierwirkung wurde durch den Grad beurteilt, mit dem der Farbstoff nach dem Anstrich auf der Oberfläche sichtbar war. Es wurde dazu wieder eine Bewertungsskala von 1 bis 5 verwendet. Die Ergebnisse sind in den Tabellen 2 und 3 wiedergegeben.

**Tabelle 2: Isolierwirkung von erfindungsgemäßen Dispersionsfarben**

| | | | | | | | |
|---|---|---|---|---|---|---|---|
| Beispiel | 2 | 3 | 4 | 5 | 6 | 7 | 8 |
| Bewertung | 5 | 5 | 4 | 4 | 4 | 4 | 5 |

**Tabelle 3: Isolierwirkung von nicht erfindungsgemäßen Farben**

| | | | |
|---|---|---|---|
| Vergleichsbeispiel | 1 | 2 | 3 |
| Bewertung | 2 | 2 | 1 |

Bei den erfindungsgemäßen Beispielen wurde durchgehend eine gute bis sehr gute Isolierwirkung erreicht, während bei den Vergleichsbeispielen nur eine niedrige bzw. keine Isolierwirkung erreicht werden konnte.

## Patentansprüche

1. Wässrige Harzemulsion, enthaltend ein Alkydharz welches erhältlich ist durch Umsetzung einer Zusammensetzung,die mindestens enthält:
- mindestens einen mehrwertigen Alkohol mit mindestens zwei Hydroxylgruppen mit einem Molekülgewicht von zumindest 60 g/mol in einem Anteil von 10 bis 35 Gew.-%,
- mindestens ein Polyetherpolyol mit einem Molekülgewicht von 400 bis 8000 g/mol in einem Anteil von 3 bis 15 Gew.-%,
- mindestens eine einbasige Carbonsäure in einem Anteil von 10 bis 60 Gew.-%, und
- mindestens eine mehrbasige Carbonsäure mit mindestens zwei Carbonsäuregruppen bzw. deren Anhydrid in einem Anteil von 10 bis 40 Gew.-%,
wobei die Harzemulsion durch Bereitstellung stickstoffhaltiger basischer Gruppen modifiziert ist, die in einem Molekül enthalten sind, das zumindest zwei stickstoffhaltige basische Gruppen umfasst und das ein Molekülgewicht von zumindest 100 g/mol aufweist, wobei die stickstoffhaltigen basischen Gruppen entweder über eine kovalente Bindung an das Alkydharz gebunden oder die stickstoffhaltigen basischen Gruppen an einer Vom Alkydharz getrennten Verbindung vorgesehen sind.

2. Harzemulsion nach Anspruch 1, wobei das Molekül, welches die stickstoffhaltigen basischen Gruppen enthält, ein Molekülgewicht von zumindest 200 g/mol aufweist.

3. Harzemulsion nach Anspruch 1 oder 2, wobei die Zusammensetzung eine Öl- oder Fettsäurekomponente enthält.

4. Harzemulsion nach einem der vorhergehenden Ansprüche, wobei die Emulsion einen pH-Wert von weniger als 7,5, bevorzugt weniger als 7,0, insbesondere bevorzugt 5,5 bis 6,5 aufweist.

5. Harzemulsion nach einem der vorhergehenden Ansprüche, wobei die stickstoffhaltigen basischen Gruppen ausgewählt sind aus primären, sekundären und tertiären Aminogruppen.

6. Harzemulsion nach einem der vorhergehenden Ansprüche, wobei das Harz eine Säurezahl im Bereich von 5 - 30 mg KOH/g Harz aufweist.

7. Harzemulsion nach einem der vorhergehenden Ansprüche, wobei die Harzemulsion bezogen auf den Feststoffgehalt einen Stickstoffgehalt von 0,4 bis 27 Gew.-%. aufweist.

8. Harzemulsion nach einem der vorhergehenden Ansprüche, wobei die Harzemulsion einen Feststoffgehalt von 25 bis 75 Gew.-% aufweist.

9. Verfahren zur Herstellung eines Alkydharzes für eine Harzemulsion nach einem der Ansprüche 1 bis 8, wobei eine Zusammensetzung die mindestens die folgenden Komponenten enthält:
- mindestens einen mehrwertigen Alkohol mit mindestens zwei Hydroxylgruppen und einem Molekülgewicht von zumindest 60 g/mol in einem Anteil von 10 bis 35 Gew.-%,
- mindestens ein Polyetherpolyol mit einem Molekülgewicht von 400 bis 8000 g/mol in einem Anteil von 3 bis 15 Gew.-%,
- mindestens eine einbasige Carbonsäure in einem Anteil von 10 bis 60 Gew.-%, und
- mindestens eine mehrbasige Carbonsäure mit mindestens zwei Carbonsäuregruppen bzw. deren Anhydrid in einem Anteil von 10 bis 40 Gew.-%,
zu einem Harz umgesetzt wird, wobei die Anteile auf das Harz bezogen sind, und das Harz durch Einführung stickstoffhaltiger basischer Gruppen modifiziert wird.

10. Verfahren nach Anspruch 9, wobei die Modifizierung des Harzes durchgeführt wird, indem der Zusammensetzung ein Monomer zugegeben wird, das mindestens eine stickstoffhaltige basische Gruppe, ggf. in geschützter Form, sowie mindestens eine reaktive Gruppe umfasst, die mit einer Gruppe einer Komponente der Zusammensetzung unter Ausbildung einer kovalenten Bindung reagieren kann.

11. Verfahren nach Anspruch 10, wobei das Monomer aus der Gruppe ausgewählt ist, die gebildet ist aus Aminosäuren, Diaminen, Oligomeren von Diaminen mit 1 bis 5 Wiederholungseinheiten, Sulfonamiden, Sulfanilamid, sowie höhermolekularen Polyaminen.

12. Verfahren nach Anspruch 9, wobei die Modifizierung des Harzes durchgeführt wird, indem zunächst ein Harz hergestellt wird, indem eine Zusammensetzung umgesetzt wird, die mindestens enthält:
- mindestens einen mehrwertigen Alkohol mit mindestens zwei Hydroxylgruppen,
- mindestens ein Polyetherpolyol mit einem Molekülgewicht von 400 bis 8000 g/mol,
- mindestens eine einbasige Carbonsäure und
- mindestens eine mehrbasige Carbonsäure mit mindestens zwei Carbonsäuregruppen bzw. deren Anhydrid,
und das Harz mit einer Verbindung umgesetzt wird, die zumindest eine stickstoffhaltige basische Gruppe, ggf. in geschützter Form, und zumindest eine reaktive Gruppe umfasst, die mit einer Gruppe am Harz unter Ausbildung einer kovalenten Bindung reagieren kann.

13. Verfahren nach Anspruch 12, wobei die Verbindung ein Diisocyanat ist.

14. Verfahren nach Anspruch 13, wobei die Umsetzung des Harzes mit dem Diisocyanat bei einem pH-Wert von weniger als 4 durchgeführt wird.

15. Verfahren nach einem der Ansprüche 9 bis 14, wobei das Harz bei einem pH-Wert von 7,0 bis 7,5 mit einem Diisocyanat vorvernetzt wird.

16. Harz, erhältlich mit einem Verfahren nach einem der Ansprüche 9 bis 15.

17. Lackfilm, hältlich aus einer Harzemulsion gemäß einem der Ansprüche 1 bis 8 durch Verdampfen des wässrigen Lösungsmittels.

## Claims

1. Aqueous resin emulsion containing an alkyd resin obtainable by reaction of a composition containing at least the following:
- at least one polyhydric alcohol having at least two hydroxyl groups and a molecular weight of at least 60 g/mol at a proportion of 10 to 35% by weight,
- at least one polyetherpolyol having a molecular weight of 400 to 8000 g/mol at a proportion of 3 to 15% by weight,
- at least one monobasic carboxylic acid at a proportion of 10 to 60% by weight, and
- at least one polybasic carboxylic acid having at least two carboxyl groups or its anhydride at a proportion of 10 to 40% by weight,
wherein the resin emulsion is modified by the provision of nitrogenous basic groups contained in a molecule which comprises at least two nitrogenous basic groups and which has a molecular weight of at least 100 g/mol wherein the nitrogenous basic groups are either attached to the alkyd resin by a covalent bond or the nitrogenous basic groups are provided at a compound separate from the alkyd resin.

2. Resin emulsion according to claim 1 wherein the molecule which contains the nitrogenous basic groups has a molecular weight of at least 200 g/mol.

3. Resin emulsion according to claim 1 or 2 wherein the composition contains an oil or fatty acid component.

4. Resin emulsion according to any of the preceding claims wherein the emulsion has a pH of less than 7.5, preferably less than 7.0, particularly preferably 5.5 to 6.5.

5. Resin emulsion according to any of the preceding claims wherein the nitrogenous basic groups are selected from primary, secondary, and tertiary amino groups.

6. Resin emulsion according to any of the preceding claims wherein the resin has an acid number in the range of 5-30 mg KOH/g resin.

7. Resin emulsion according to any of the preceding claims wherein the resin emulsion has a nitrogen content of 0.4% to 27% by weight based on the solids content.

8. Resin emulsion according to any of the preceding claims wherein the resin emulsion has a solids content of 25% to 75% by weight.

9. Process for preparing an alkyd resin for a resin emulsion according to any one of claims 1 to 8, wherein a composition containing at least the following components:
- at least one polyhydric alcohol having at least two hydroxyl groups and a molecular weight of at least 60 g/mol at a proportion of 10 to 35% by weight,
- at least one polyetherpolyol having a molecular weight of 400 to 8000 g/mol at a proportion of 3 to 15% by weight,
- at least one monobasic carboxylic acid at a proportion of 10 to 60% by weight, and
- at least one polybasic carboxylic acid having at least two carboxyl groups or its anhydride at a proportion of 10 to 40% by weight,
is converted to a resin, wherein the proportions are based on the resin, and the resin is modified by the introduction of nitrogenous basic groups.

10. Process according to claim 9 wherein the resin is modified by adding to the composition a monomer comprising at least one nitrogenous basic group, optionally in protected form, and also at least one reactive group capable of reacting with a group of a component of the composition to form a covalent bond.

11. Process according to claim 10 wherein the monomer is selected from the group consisting of amino acids, diamines, oligomers of diamines having 1 to 5 repeat units, sulfonamides, sulfanilamide as well as high molecular weight polyamines.

12. Process according to claim 9 wherein the resin is modified by first preparing a resin by reacting a composition containing at least the following:
- at least one polyhydric alcohol having at least two hydroxyl groups,
- at least one polyetherpolyol having a molecular weight of 400 to 8000 g/mol,
- at least one monobasic carboxylic acid, and
- at least one polybasic carboxylic acid having at least two carboxyl groups or its anhydride,
and reacting the resin with a compound comprising at least one nitrogenous basic group, optionally in protected form, and at least one reactive group capable of reacting with a group on the resin to form a covalent bond.

13. Process according to claim 12 wherein the compound is a diisocyanate.

14. Process according to claim 13 wherein the reaction of the resin with the diisocyanate is carried out at a pH of less than 4.

15. Process according to any one of claims 9 to 14 wherein the resin is precrosslinked with a diisocyanate at a pH of 7.0 to 7.5.

16. Resin obtainable by a process according to any one of claims 9 to 15.

17. Coating film obtainable from a resin emulsion according to any one of claims 1 to 8 by evaporating the aqueous solvent.

## Revendications

1. Emulsion aqueuse de résine contenant une résine alkyde, laquelle peut être obtenue par réaction d'une composition, qui contient au moins :
- au moins un alcool polyvalent avec au moins deux groupes hydroxyle avec une masse moléculaire d'au moins 60 g/mol dans une part de 10 à 35 % en masse,
- au moins un polyétherpolyol avec une masse moléculaire de 400 à 8 000 g/mol dans une part de 3 à 15 % en masse,
- au moins un acide carboxylique monobasique dans une part de 10 à 60 % en masse, et
- au moins un acide carboxylique polybasique avec au moins deux groupes d'acide carboxylique respectivement son anhydride dans une part de 10 à 40 % en masse,
dans laquelle l'émulsion de résine est modifiée par préparation de groupes basiques contenant de l'azote, lesquels sont contenus dans une molécule qui comprend au moins deux groupes basiques contenant de l'azote et qui présente une masse moléculaire d'au moins 100 g/mol, dans laquelle les groupes basiques contenant de l'azote sont soit liés à la résine alkyde par une liaison covalente, soit les groupes basiques contenant de l'azote sont prévus sur un composé séparé de la résine alkyde.

2. Emulsion de résine selon la revendication 1, dans laquelle la molécule, qui contient les groupes basiques contenant de l'azote, présente une masse moléculaire d'au moins 200 g/mol.

3. Emulsion de résine selon la revendication 1 ou 2, dans laquelle la composition contient un constituant d'huile ou d'acide gras.

4. Emulsion de résine selon l'une quelconque des revendications précédentes, dans laquelle l'émulsion présente une valeur de pH inférieure à 7,5, de préférence inférieure à 7,0, encore mieux de 5,5 à 6,5.

5. Emulsion de résine selon l'une quelconque des revendications précédentes, dans laquelle les groupes basiques contenant de l'azote sont choisis parmi des groupes amino primaires, secondaires et tertiaires.

6. Emulsion de résine selon l'une quelconque des revendications précédentes, dans laquelle la résine présente un indice acide dans un domaine de 5 - 30 mg de KOH/g de résine.

7. Emulsion de résine selon l'une quelconque des revendications précédentes, dans laquelle l'émulsion de résine présente, rapporté à la teneur en matière solide, une teneur en azote de 0,4 à 27 % en masse.

8. Emulsion de résine selon l'une quelconque des revendications précédentes, dans laquelle l'émulsion de résine présente une teneur en matière solide de 25 à 75 % en masse.

9. Procédé pour la préparation d'une résine alkyde pour une émulsion de résine selon l'une quelconque des revendications 1 à 8, dans lequel une composition qui contient au moins les constituants suivants :
- au moins un alcool polyvalent avec au moins deux groupes hydroxyle et une masse moléculaire d'au moins 60 g/mol dans une part de 10 à 35 % en masse,
- au moins un polyétherpolyol avec une masse moléculaire de 400 à 8 000 g/mol dans une part de 3 à 15 % en masse,
- au moins un acide carboxylique monobasique dans une part de 10 à 60 % en poids, et
- au moins un acide carboxylique polybasique avec au moins deux groupes d'acide carboxylique respectivement son anhydride dans une part de 10 à 40 % en poids,
réagit pour former une résine, dans lequel les parts sont rapportées à la résine, et la résine est modifiée par introduction de groupes basiques contenant de l'azote.

10. Procédé selon la revendication 9, dans lequel la modification de la résine est réalisée en ce que l'on introduit dans la composition un monomère, lequel comprend au moins un groupe basique contenant de l'azote, éventuellement dans une forme protégée, ainsi qu'au moins un groupe réactif qui peut réagir avec un groupe d'un constituant de la composition avec la formation d'une liaison covalente.

11. Procédé selon la revendication 10, dans lequel le monomère est choisi dans le groupe qui est constitué d'aminoacides, de diamines, d'oligomères de diamines avec de 1 à 5 unités de répétition, de sulfonamides, de sulfanilamide ainsi que de polyamines de poids moléculaire élevé.

12. Procédé selon la revendication 9, dans lequel la modification de la résine est réalisée en ce que l'on prépare dans un premier temps une résine, en ce que l'on fait réagir une composition qui contient au moins :
- au moins un alcool polyvalent avec au moins deux groupes hydroxyle,
- au moins un polyétherpolyol avec une masse moléculaire de 400 à 8 000 g/mol,
- au moins un acide carboxylique monobasique et
- au moins un acide carboxylique polybasique avec au moins deux groupes d'acide carboxylique respectivement son anhydride,
et on fait réagir la résine avec un composé qui comprend au moins un groupe basique contenant de l'azote, éventuellement dans une forme protégée, et au moins un groupe réactif qui peut réagir avec un groupe sur la résine avec la formation d'une liaison covalente.

13. Procédé selon la revendication 12, dans lequel le composé est un diisocyanate.

14. Procédé selon la revendication 13, dans lequel la réaction de la résine avec le diisocyanate est réalisée à une valeur de pH inférieure à 4.

15. Procédé selon l'une quelconque des revendications 9 à 14, dans lequel la résine est pré-réticulée à une valeur de pH de 7,0 à 7,5 avec un diisocyanate.

16. Résine, laquelle peut être obtenue avec un procédé selon l'une des revendications 9 à 15.

17. Film de laque, lequel peut être obtenu à partir d'une émulsion de résine selon l'une des revendications 1 à 8 par évaporation du solvant aqueux.
